# EUROPEAN PATENT APPLICATION

(11) **EP 4 815 625 A1**
(43) Date of publication of application: **30.09.2026**
(21) Application number: 24900808.7
(22) Date of filing: 02.10.2024
(51) Int. Cl.: H05B 6/06, H05B 6/12, H02M 1/00

(54) **INDUCTION HEATING DEVICE FOR CONTROLLING POWER DISTRIBUTION, AND CONTROL METHOD THEREFOR**

(30) Priority: 04.12.2023 KR 20230173441
(71) Applicant: Samsung Electronics Co., Ltd., Suwon-si, Gyeonggi-do 16677 (KR)
(72) Inventor: JANG, Eunsu, Suwon-si, Gyeonggi-do 16677 (KR); KANG, Hongjoo, Suwon-si, Gyeonggi-do 16677 (KR); KO, Byunghwan, Suwon-si, Gyeonggi-do 16677 (KR); SUNG, Byoungmo, Suwon-si, Gyeonggi-do 16677 (KR); LEE, Myeongwon, Suwon-si, Gyeonggi-do 16677 (KR)
(74) Representative: Walaski, Jan Filip
(86) International application number: PCT/KR2024/014972
(87) International publication number: WO 2025/121620

(57) **Abstract**

The present disclosure relates to an induction heating device for controlling power distribution, and a control method therefor, and provides a configuration in which power that is output from a plurality of inverters included in the induction heating device is detected and, if the ratio between the detected powers exceeds or is less than a set ratio, the duty of a switching element included in at least one from among the plurality of inverters is adjusted to uniformly distribute power that is output from the plurality of inverters.

## Description

### Technical Field

An embodiment of the present disclosure relates to an induction heating device for controlling power distribution and a method of controlling the same.

### Background Art

An induction heating device is a device that cooks by using a magnetic induction phenomenon. The induction heating device may supply harmonic alternating current (AC) power to a working coil by using an inverter. When harmonic AC power is supplied, a magnetic field is formed around the working coil. The magnetic field formed around the working coil induces eddy currents while passing through the bottom (or lower surface) of a conductive cooking vessel. Thus, the conductive cooking vessel is heated, and the contents contained in the conductive cooking vessel are heated.

The inverter built into the induction heating device may output power (high-frequency AC power) based on a resonance frequency of the working coil. The resonance frequency of the working coil may vary depending on the size and shape of the corresponding coil. Accordingly, when a cooking vessel is placed on a plurality of working coils, a difference in powers output from inverters corresponding to the respective working coils may occur due to differences in the resonance characteristics among the working coils. When there are differences in the powers output from the inverters corresponding to the respective working coils, heat distribution among the plurality of working coils becomes non-uniform, which may reduce the thermal efficiency of the cooking vessel. For example, a portion of the cooking vessel may be heated more rapidly than another portion, and thus a portion of contents contained in the cooking vessel may burn or overheat.

### Disclosure of Invention

### Solution to Problem

According to an embodiment of the present disclosure, an induction heating device including a plurality of working coils includes a first inverter that supplies current to a first working coil among the plurality of working coils. The induction heating device includes a second inverter that supplies current to a second working coil among the plurality of working coils. The induction heating device includes memory storing at least one instruction and at least one processor that executes the at least one instruction to control operations of the first inverter and the second inverter. According to an embodiment of the present disclosure, the at least one processor may obtain first power output from the first inverter. The at least one processor may obtain second power output from the second inverter after identifying a state in which a cooking vessel is placed on a first working coil and a second working coil. The at least one processor may obtain a ratio value between the first power and the second power. When the obtained ratio value is greater than or less than a set ratio value, the at least one processor may perform an operation of adjusting a duty of the switching device provided in at least one of the first inverter and the second inverter to include the ratio value in the set ratio value.

According to an embodiment of the present disclosure, a control method of an induction heating device including a plurality of working coils may include obtaining first power output from a first inverter that supplies current to a first working coil among the plurality of working coils. The method according to an embodiment of the present disclosure may include obtaining second power output from a second inverter that supplies current to a second working coil among the plurality of working coils. The method according to an embodiment of the present disclosure may include obtaining a ratio value between the first power and the second power. The method according to an embodiment of the present disclosure may include, when the ratio value (R1) is greater than or less than a set ratio value (α), adjusting the duty of the switching device provided in at least one of the first inverter and the second inverter to include the ratio value in the set ratio value.

### Brief Description of Drawings

FIG. 1 is a diagram for explaining an induction heating device according to an embodiment of the present disclosure.
FIG. 2 is a cross-sectional view in which a cooking vessel is placed on a working coil provided in an induction heating device, according to an embodiment of the present disclosure.
FIG. 3A is a diagram for explaining the configuration of a working coil and an inverter provided in an induction heating device, according to an embodiment of the present disclosure.
FIG. 3B is a diagram for explaining the configuration of a working coil and an inverter provided in an induction heating device, according to an embodiment of the present disclosure.
FIG. 3C shows an example of a plurality of temperature values of a cooking vessel, obtained by a processor of an induction heating device, and a difference value between the obtained plurality of temperature values, according to an embodiment of the present disclosure.
FIG. 3D illustrates an example of power waveforms of a first inverter and a second inverter in an induction heating device, according to an embodiment of the present disclosure.
FIG. 4 is a detailed circuit diagram of an inverter and a working coil provided in an induction heating device, according to an embodiment of the present disclosure.
FIG. 5 is a functional block diagram of an induction heating device according to an embodiment of the present disclosure.
FIG. 6 is a flowchart of a control method of an induction heating device, according to an embodiment of the present disclosure.
FIG. 7 is a waveform diagram for explaining frequency control and duty control of an inverter, performed in an induction heating device, according to an embodiment of the present disclosure.
FIG. 8 is a flowchart of a control method of an induction heating device, according to an embodiment of the present disclosure.
FIG. 9 is a diagram showing a relationship between power and frequency output from two inverters in an induction heating device, according to an embodiment of the present disclosure.
FIG. 10 is a flowchart of a control method of an induction heating device, according to an embodiment of the present disclosure.
FIG. 11 is a flowchart of a control method of an induction heating device, according to an embodiment of the present disclosure.
FIG. 12 is a diagram illustrating an example of increasing a duty based on phase angles detected from a plurality of inverters described with reference to FIG. 11.
FIG. 13 is a flowchart of a control method of an induction heating device, according to an embodiment of the present disclosure.
FIG. 14 is a diagram illustrating a point in time when an induction heating device begins to perform an operation of reducing a duty of an inverter, according to an embodiment of the present disclosure.
FIG. 15 is a flowchart of a control method of an induction heating device, according to an embodiment of the present disclosure.
FIG. 16 is a flowchart of a control method of an induction heating device, according to an embodiment of the present disclosure.

### Mode for the Invention

The terms used in the present disclosure will be briefly described, and an embodiment of the present disclosure will be described in detail.

The terms used in the present disclosure are selected from the most widely used general terms possible while considering the functions in an embodiment of the present disclosure, but may vary depending on the intention of engineers in the field, precedents, the emergence of new technologies, and the like. In certain cases, there are terms arbitrarily selected by the applicant, and in such cases, their meanings are described in detail in the corresponding description of an embodiment of the present disclosure. Therefore, the terms used in the present disclosure need to be defined based on the meaning of the terms and the overall content of the present disclosure, rather than simply the names of the terms.

In the present disclosure, the expression "at least one of a, b or c" may refer to "a", "b", "c", "a and b", "a and c", "b and c", "all of a, b and c", or variations thereof.

In the present disclosure, the term "and/or" includes any combination of a plurality of described components or any one of the plurality of related described components. The terms such as "1st", "2nd", or "first" or "second" may be used merely to distinguish one component from another, and do not limit the components in any other aspect (e.g., importance or order).

Throughout the present disclosure, unless explicitly described to the contrary, the word "comprise" or "include" and variations such as "comprises" or "includes" or "comprising" or "including", will be understood to imply the inclusion of stated elements but not the exclusion of any other elements.

The terms such as "unit" or "module" disclosed in the present disclosure mean units for processing at least one function or operation. The terms such as "unit" or "module" disclosed in the present disclosure may be implemented by hardware or software such as field programmable gate array (FPGA) or application specific integrated circuit (ASIC), or in a combination of hardware and software. The term "unit" used in an embodiment of the present disclosure is not limited to software or hardware. The "unit" used in the present disclosure may be formed so as to be stored in an addressable storage medium, or may be formed so as to operate one or more processors. In an embodiment of the present disclosure, the term "unit" may include components such as software components, object-oriented software components, class components, and task components, processes, functions, properties, procedures, subroutines, segments of program code, drivers, firmware, microcode, circuits, data, databases, data structures, tables, arrays, and variables. Functions provided by certain elements and a certain "unit" may be combined in a smaller number of elements or may be separated into additional elements. In an embodiment, the "unit" may include one or more processors.

In an embodiment of the present disclosure, each block of flowcharts and combinations of the flowcharts may be performed by computer program instructions. Computer program instructions may be installed on a processor of a general computer, a special computer or other programmable data processing equipment. The instructions executed through the processor of the computer or other programmable data processing equipment may generate an element for performing functions described in block(s) of flowcharts. Computer program instructions may be stored in computer available or computer readable memory that may direct a computer or other programmable data processing equipment to implement functions in a certain way. Instructions stored in the computer available or computer readable memory may also produce manufacturing items that contain instruction elements for performing the functions described in the block(s) of the flowcharts. It is also possible that computer program instructions are installed on a computer or other programmable data processing equipment.

Each block of flowcharts may indicate a part of a module, segment or code including one or more executable instructions for executing a certain logical function(s). In an embodiment of the present disclosure, it is also possible that functions mentioned in the blocks are performed out of order. For example, two blocks that are consecutively shown may actually be performed at the same time, or in reverse order depending on the function.

Hereinafter, embodiments of the present disclosure are described in detail such that those of skill in the art may easily implement the same with reference to the accompanying drawings. However, an embodiment of the present disclosure may be implemented in various different forms and is not limited to the embodiments described herein. To clearly explain an embodiment of the present disclosure in the drawings, portions that are not related to explanation are omitted, and similar portions are given similar drawing reference numerals throughout the present disclosure.

When a cooking vessel is placed on a plurality of working coils provided in an induction heating device, frequencies of inverters corresponding to the respective working coils may be reduced to increase power applied to the plurality of working coils. When the frequencies of the inverters are reduced, differences between powers output from the inverters corresponding to the respective working coils may gradually increase due to differences in quality factors (Q-factors) of the plurality of working coils. When the differences between the powers output from the inverters gradually increase, the distribution of the powers output from the inverters may become non-uniform.

When the distribution of powers output from the inverters corresponding to the respective working coils becomes non-uniform, the efficiency of the inverter may decrease or the heat distribution of the corresponding working coil may be non-uniform. As a result, the thermal efficiency of the cooking vessel may decrease, leading to an increased cooking time and resulting in non-uniform cooking results. For example, some of the contents of the cooking vessel may burn or overheat. A decrease in the thermal efficiency of a cooking vessel due to non-uniform heat distribution of the corresponding working coil may lead to a decrease in the thermal efficiency of an induction heating device. When the distribution of the powers output from the inverters corresponding to the respective working coils becomes non-uniform, a high current may flow in a resonant network of some working coils (e.g., an inner working coil). When a high current flows through the resonant network, the working coil may be damaged or a switching device built into the inverter corresponding to the working coil may be burned out. The resonant network refers to a resonant circuit configured based on the working coil. The resonant network may include a working coil and a capacitor, but is not limited thereto.

When a cooking vessel is placed on a plurality of working coils, this may mean that the cooking vessel is electrically connected to the plurality of working coils. This is because a magnetic field of the corresponding working coil passes through the cooking vessel and generates eddy currents. When the cooking vessel is placed on the plurality of working coils, this may mean that the cooking vessel uses the plurality of working coils. The plurality of working coils may have an inner and outer structure. The inner and outer structure may be a structure in which the plurality of working coils are divided into an inner portion and an outer portion. The plurality of working coils may have a separate structure. The separate structure may be a structure in which the plurality of working coils are arranged adjacent to each other at different locations. The plurality of working coils may have a structure obtained by combining the inner and outer structure with the separate structure. The shape of the working coil may be circular, oval, or square. The structure of the plurality of working coils according to an embodiment of the present disclosure is not limited to the above description.

According to an embodiment of the present disclosure, an induction heating device and a method of controlling the same may be provided, which control power distribution such that powers output from inverters corresponding to the respective working coils are uniformly distributed when a cooking vessel is placed on the plurality of working coils.

According to an embodiment of the present disclosure, an induction heating device and a method of controlling the same may be provided, which control power distribution such that powers output from inverters corresponding to the respective working coils are uniformly distributed in a wide power range when a cooking vessel is placed on the plurality of working coils.

According to an embodiment of the present disclosure, an induction heating device and a method of controlling the same may be provided, which control power distribution such that power input to the plurality of working coils is uniformly distributed in a wide power range when a cooking vessel is placed on the plurality of working coils.

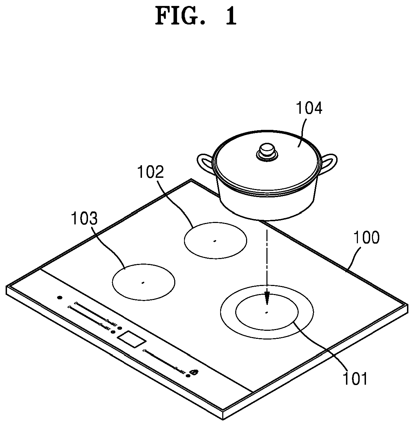

FIG. 1 is a diagram for explaining an induction heating device 100 according to an embodiment of the present disclosure.

Referring to FIG. 1, the induction heating device 100 according to an embodiment of the present disclosure may be referred to as an induction cooking apparatus, an induction range, an induction cooktop, or a heating device, but is not limited thereto.

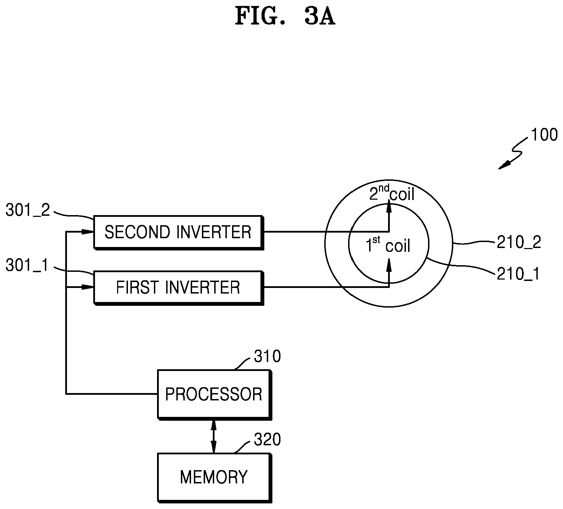

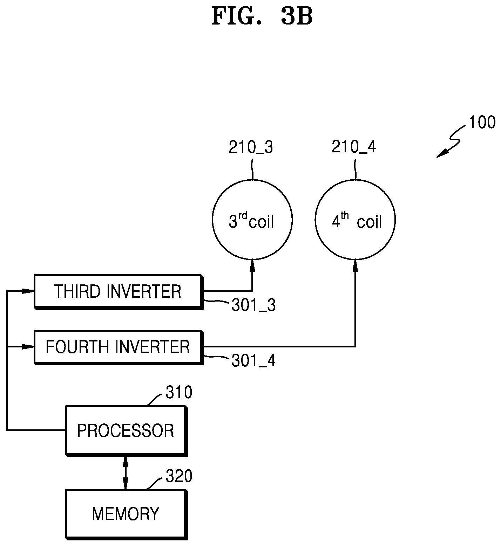

The induction heating device 100 according to an embodiment of the present disclosure may include a plurality of burners 101, 102, and 103 as shown in FIG. 1, but is not limited thereto. For example, the plurality of burners 101, 102, and 103 shown in FIG. 1 are configured in a circular shape, but at least some of the burners may be configured in a square shape. For example, the plurality of burners 101, 102, and 103 may all be configured in a squares shape. For example, the induction heating device 100 may include fewer burners than the plurality of burners 101, 102, and 103 shown in FIG. 1. For example, the induction heating device 100 may include more burners than the plurality of burners 101, 102, and 103 shown in FIG. 1. For example, a first burner 101 may correspond to a plurality of working coils 210_1 and 210_2 having a structure in which two working coils are arranged as an inner working coil 210_1 and an outer working coil 210_2, as shown in FIG. 3A to be described below. For example, the plurality of burners 102 and 103 may correspond to a plurality of working coils 210_3 and 210_4 having an independent structure, as shown in FIG. 3B to be described below. For example, the plurality of burners 101, 102, and 103 may each correspond to the plurality of working coils 210_1 and 210_2 arranged in an inner and outer structure, as shown in FIG. 3A to be described below. For example, the plurality of burners 101, 102, and 103 may each correspond to the plurality of working coils 210_3 and 210_4 having an independent structure, as shown in FIG. 3B to be described below. When the plurality of burners 101, 102, and 103 are configured in a square shape, the working coils corresponding to the plurality of burners 101, 102, and 103 may also be configured to conform to the square structure.

The cooking vessel 104 illustrated in FIG. 1 may include a conductive cooking vessel. The cooking vessel 104 illustrated in FIG. 1 may be a device for cooking (or heating) contents inside the cooking vessel 104. For example, the contents inside the cooking vessel 104 may be liquids such as water, tea, coffee, soup, juice, or oil. For example, the contents inside the cooking vessel 104 may be solids such as butter, meat, vegetables, bread, or rice. The contents inside the cooking vessel 104 are not limited to the above description.

According to an embodiment of the present disclosure, the cooking vessel 104 may receive power wirelessly from the induction heating device 100 by using electromagnetic induction. Therefore, the cooking vessel 104 may not include a power cord connected to a power outlet.

According to an embodiment of the present disclosure, the types of the cooking vessel 104 may vary. The types of the cooking vessel 104 may be classified according to size and magnetic material (e.g., iron, stainless steel, or aluminum-coated iron). The cooking vessel 104 may include an induction heating (IH) vessel or a magnetic vessel. For example, the cooking vessel 104 may be an IH vessel such as a pot, frying pan, or steamer. The cooking vessel 104 may include a cooker device. The cooker device may be a device into which an IH vessel is to be inserted or from which the IH vessel is to be removed. The cooker device may be a device capable of automatically cooking contents according to a recipe.

According to an embodiment of the present disclosure, when the cooking vessel 104 includes a communication interface, the cooking vessel 104 may communicate with the induction heating device 100. The cooking vessel 104 may also communicate with an external device (e.g., a mobile device) other than the induction heating device 100. The communication interface may include a short-range wireless communication interface, a long-range wireless communication interface, and the like. The short-range wireless communication interface may include, but is not limited to, a Bluetooth communication unit, a Bluetooth low energy (BLE) communication unit, a near field communication (NFC) communication unit, a WLAN (Wi-Fi) communication unit, a Zigbee communication unit, an infrared data association (IrDA) communication unit, a Wi-Fi direct (WFD) communication unit, an ultra wideband (UWB) communication unit, or/and an Ant+ communication unit.

When the cooking vessel 104 is controlled remotely by a server device (not shown) in an Internet of Things (IoT) environment, the long-range wireless communication interface may be used to communicate with a server device (not shown). In this case, the cooking vessel 104 may be an IoT device. The long-range wireless communication interface may include at least one of the Internet, a computer network (e.g., LAN or WAN), and/or a mobile communication unit. The mobile communication unit may include at least one of a 3rd generation (3G) module, a 4th generation (4G) module, a 5th generation (5G) module, a long term evolution (LTE) module, a narrowband Internet of Things (NB-IoT) module, and/or an LTE-machine type communication (LTE-M) module, but is not limited thereto.

According to an embodiment of the present disclosure, the cooking vessel 104 may transmit information to a server device through the induction heating device 100. For example, the cooking vessel 104 may transmit information obtained from the cooking vessel 104 (e.g., temperature information of contents) to the induction heating device 100 via short-range wireless communication (e.g., Bluetooth, BLE, or the like). In this case, the induction heating device 100 may transmit information obtained from the cooking vessel 104 to the server device by connecting to the server device by using a WLAN (Wi-Fi) communication unit or a long-range wireless communication interface (e.g., the Internet).

The server device may provide information obtained from the cooking vessel 104, received from the induction heating device 100, to a user through a mobile device (not shown) connected to the server device. According to another embodiment of the present disclosure, the induction heating device 100 may directly transmit information obtained from the cooking vessel 104 to a mobile device of a user via device to device (D2D) communication (e.g., Wi-Fi direct (WFD) communication or BLE communication). The mobile device may include a smartphone, a smart watch, smart glasses, a smart accessory, a wearable device (e.g., a smart band, or a smart helmet), an autonomous vehicle, a laptop computer, a tablet PC, a digital camera, an e-book reader, a digital broadcasting terminal, personal digital assistants (PDA), a portable multimedia player (PMP), a navigation system, an MP3 player, or a portable home appliance (e.g., robot vacuum cleaner), but the mobile device is not limited thereto. The mobile device may also be referred to as a user terminal.

According to an embodiment of the present disclosure, the cooking vessel 104 may transmit information of the cooking vessel 104 (e.g., temperature information of contents, or temperature information of a bottom surface of the cooking vessel 104, and the like) to a server device through a communication interface (e.g., WLAN (Wi-Fi) communication unit). The cooking vessel 104 may transmit information obtained from the cooking vessel 104 (e.g., temperature information of contents, and the like) to the mobile device of the user via short-range wireless communication (e.g., Bluetooth, BLE, or the like) or device to device (D2D) communication (e.g., Wi-Fi direct (WFD) communication).

The induction heating device 100 according to an embodiment of the present disclosure may be a device that wirelessly transmits power to the cooking vessel 104 located on a top plate (or on a plurality of working coils) by using electromagnetic induction. The induction heating device 100 may include a plurality of working coils that generate a magnetic field for induction heating of the cooking vessel 104.

Generating a magnetic field by a working coil may include transmitting power by utilizing a magnetic field induced in an IH metal (e.g., iron component) via magnetic induction. For example, the induction heating device 100 may generate eddy currents in the cooking vessel 104 by passing current through the working coil to form a magnetic field.

According to an embodiment of the present disclosure, the induction heating device 100 may include a plurality of working coils. For example, the induction heating device 100 may include a plurality of working coils corresponding to each of the plurality of burners 101, 102, and 103. The induction heating device 100 may include a high-output burner having the first working coil 210_1 on an inner side and the second working coil 210_2 on an outer side, as shown in FIG. 3A to be described below. The high-output burner may include three or more working coils. In an embodiment of the present disclosure, the burner may be referred to as a cooking zone.

The top plate of the induction heating device 100 according to an embodiment of the present disclosure may include reinforced glass such as ceramic glass, or the like that is not easily broken. The top plate of the induction heating device 100 may include a guide mark for indicating a burner on which the cooking vessel 104 needs to be placed.

The induction heating device 100 according to an embodiment of the present disclosure may identify (or detect) a state in which the cooking vessel 104 is placed on the plurality of working coils. For example, the induction heating device 100 may identify that the cooking vessel 104 is placed on the plurality of working coils when a current value of the plurality of working coils (inductance) is greater than or equal to a set current value. For example, the induction heating device 100 may identify that the cooking vessel 104 is placed on the plurality of working coils when an output value of the plurality of working coils is greater than or equal to a set output value. For example, the set current value may be a current value corresponding to about 10 to 20 % of the capacity of a working coil. For example, the set output value may be an output value corresponding to about 10 to 20 % of the capacity of the working coil. The set current value or the set output value is not limited to the above description. The current value of the working coil or the output value of the plurality of working coils may also be obtained (or detected) by using a magnetic field detection sensor. The magnetic field detection sensor may be provided on a portion of the top plate of the induction heating device 100.

For example, the magnetic field detection sensor may connect an input terminal of the magnetic field detection sensor to an output terminal of each working coil corresponding to the plurality of burners 101, 102, and 103 provided in the induction heating device 100, and connect the output terminal of the magnetic field detection sensor to a processor 310 of the induction heating device 100. For example, the magnetic field detection sensor may receive the magnetic field of each working coil corresponding to the plurality of burners 101, 102, and 103 via radio waves and transmit the measured magnetic field to the processor 310. The magnetic field detection sensor may be provided in the same number as the working coils. The magnetic field detection sensor may be provided as a single magnetic field detection sensor capable of detecting a current value, output value, or magnetic field of the plurality of working coils.

An operation of identifying (or detecting) a state in which the cooking vessel 104 according to an embodiment of the present disclosure is placed on the plurality of working coils may include an operation of identifying a state in which the cooking vessel 104 is placed on the plurality of working coils 201_1 and 201_2 having a structure as shown in FIG. 3A. The operation of identifying a state in which the cooking vessel 104 according to an embodiment of the present disclosure is placed on the plurality of working coils may include an operation of identifying a state in which the cooking vessel 104 is placed on a plurality of working coils 201_3 and 201_4 having a structure as shown in FIG. 3B. The operation of identifying a state in which the cooking vessel 104 according to an embodiment of the present disclosure is placed on the plurality of working coils may include an operation of identifying a state in which the cooking vessel 104 is placed on the plurality of working coils corresponding to the plurality of burners 101, 102, and 103, as shown in FIG. 1. The operation of identifying a state in which the cooking vessel 104 according to an embodiment of the present disclosure is placed on the plurality of working coils may include an operation of identifying a state in which the cooking vessel 104 is placed on the plurality of working coils 201_1 and 201_2 having a structure as shown in FIG. 3A and the plurality of working coils 201_3 and 201-4 having a structure as shown in FIG. 3B.

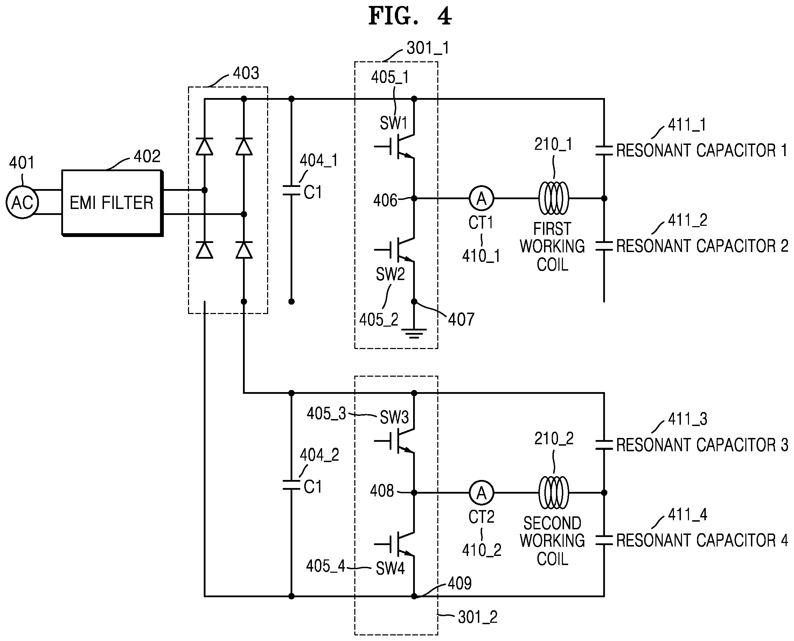

When input power supplied to the plurality of working coils is greater than or equal to set power, the induction heating device 100 may identify that the cooking vessel 104 is placed on the plurality of working coils. The input power supplied to the plurality of working coils may be calculated by using the current value measured by using current sensors 410_1 and 410_2 shown in FIG. 4 to be described below. When a phase difference occurs between a voltage supplied to the plurality of working coils and an induced current, the induction heating device 100 may identify that the cooking vessel 104 is placed on the plurality of working coils. The voltage supplied to the plurality of working coils and the induced current may be detected by using a current value measured by the current sensors 410_1 and 410_2 and an output value of the plurality of working coils, respectively.

The induction heating device 100 may identify (or detect) a state in which the cooking vessel 104 is placed on the working coil by using a camera sensor. The camera sensor may be provided on a portion of the top plate of the induction heating device 100. The camera sensor may be provided on a portion of a side surface of the induction heating device 100. For example, the induction heating device 100 may identify (or detect) a state in which the cooking vessel 104 is placed on the working coil by using a weight detection sensor. For example, the weight detection sensor may be provided on a portion of the top plate of the induction heating device 100. The weight detection sensor may be provided on a portion of the top plate adjacent to a working coil corresponding to the plurality of burners 101, 102, and 103 provided in the induction heating device 100.

The induction heating device 100 may identify a state in which the cooking vessel 104 is placed on at least one working coil by using at least two of the magnetic field detection sensor, camera sensor, and weight detection sensor described above.

The induction heating device 100 according to an embodiment of the present disclosure may identify a state in which the cooking vessel 104 is placed on the plurality of working coils, and then control a duty of a switching device provided in an inverter such that the distribution of powers output from inverters corresponding to the respective working coils are uniform. The induction heating device 100 according to an embodiment of the present disclosure may not identify whether the cooking vessel 104 is placed on the plurality of working coils, and then control a duty of a switching device provided in an inverter such that distribution of powers output from inverters corresponding to the respective working coils are uniform. The induction heating device 100 according to an embodiment of the present disclosure may control the duty of the switching device provided in the inverter such that the powers output from the inverters corresponding to the respective working coils are uniform regardless of whether or not the cooking vessel 104 is placed on the plurality of working coils (or regardless of an operation to identify whether the cooking vessel 104 is placed on the plurality of working coils).

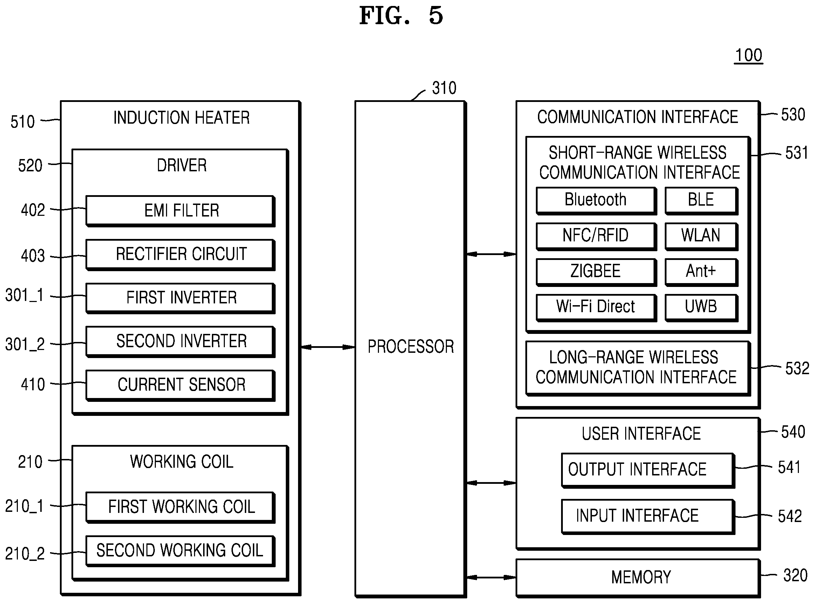

According to an embodiment of the present disclosure, the induction heating device 100 may include a communication interface 530 illustrated in FIG. 5 to be described below, to communicate with an external device (e.g., mobile device, or server device). For example, the induction heating device 100 may communicate with the cooking vessel 104 or a server device through the communication interface 530. The communication interface 530 may include at least one of a short-range wireless communication interface 531 (e.g., NFC communication unit, Bluetooth communication unit, or BLE communication unit) or a mobile communication unit.

According to an embodiment of the present disclosure, the induction heating device 100 may identify the cooking vessel 104 placed on the plurality of working coils through the communication interface 530. For example, the induction heating device 100 may identify a state in which the cooking vessel 104 is placed on the plurality of working coils by receiving a packet transmitted from the cooking vessel 104 placed on the plurality of working coils by using short-range wireless communication (e.g., Bluetooth low energy (BLE) mesh network, or Bluetooth). The induction heating device 100 may identify a state in which the cooking vessel 104 is placed on at least one working coil by receiving a packet transmitted from the cooking vessel 104 placed on at least one working coil by using short-range wireless communication.

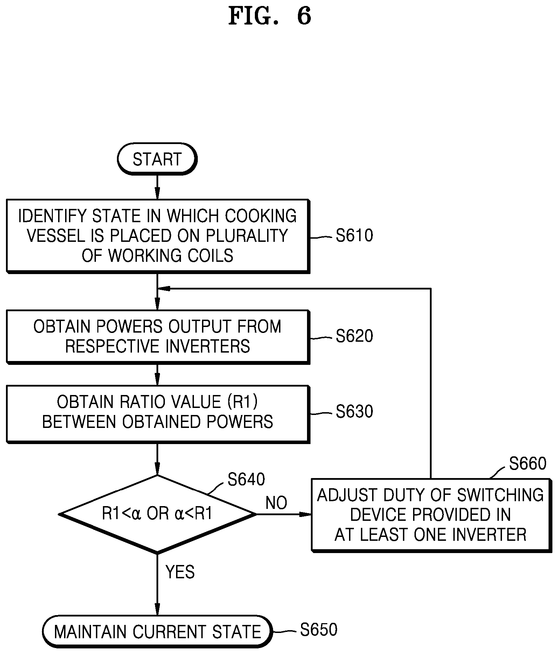

According to an embodiment of the present disclosure, the induction heating device 100 may transmit information about powers output from a plurality of inverters to a server device (or an external device (e.g., mobile device)) through the communication interface 530. The server device (or external device) may transmit a signal to the induction heating device 100 through the communication interface 530 provided in the induction heating device 100 to uniformly control the distribution of the powers output from the plurality of inverters based on the information about the received powers output from the plurality of inverters. The server device (or external device) may generate a signal that uniformly controls the distribution of the powers output from the plurality of inverters by performing a method similar to the control method of the induction heating device 100 described with reference to FIGS. 6 to 16 below.

According to an embodiment of the present disclosure, the induction heating device 100 may display information related to the cooking vessel 104 through a user interface 540, as illustrated in FIG. 5 to be described below. For example, when the cooking vessel 104 is placed on a plurality of working coils, the induction heating device 100 may display identification information of the cooking vessel 104, and location information of the cooking vessel 104 (e.g., (x, y) coordinate information of the top plate of the induction heating device 100 or information about the working coil on which the cooking vessel 104 is placed (e.g., location information of the working coil)) on an output interface (e.g., display) 541 provided in the user interface 540 shown in FIG. 5 to be described below. Even when the cooking vessel 104 is placed on at least one working coil, the induction heating device 100 may display identification information of the cooking vessel 104 and location information of the cooking vessel 104 on the output interface 541 provided in the user interface 540.

Referring to FIG. 1, when a cooking vessel 104 (e.g., pot) is placed on a plurality of working coils provided in the induction heating device 100, the induction heating device 100 may provide identification information of the cooking vessel 104 (e.g., a pot) and location information of the cooking vessel 104 (e.g., location information of the right burner 101) to a user through the output interface (e.g., display) 541. Even when a cooking vessel 104 (e.g., pot) is placed on at least one working coil provided in the induction heating device 100, the induction heating device 100 may provide identification information of the cooking vessel 104 (e.g., a pot) and location information of the cooking vessel 104 (e.g., location information of the right burner 101) to a user through the output interface (e.g., display) 541.

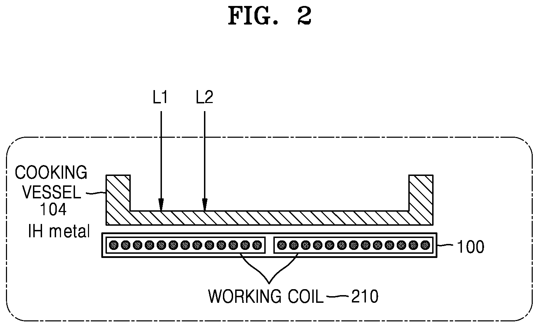

FIG. 2 is a cross-sectional view in which the cooking vessel 104 is placed on a working coil provided in the induction heating device 100, according to an embodiment of the present disclosure.

Referring to FIG. 2, the cooking vessel 104 may include a magnetic material (e.g., IH metal) in which a magnetic field is to be induced. The cooking vessel 104 may be inductively heated by the induction heating device 100 and may be a vessel of various shapes including a magnetic material. Induction heating IH is a method of heating IH metals by using a magnetic induction phenomenon. For example, when high-frequency current is supplied to a working coil 210 provided in the induction heating device 100, a time-varying magnetic field is induced inside the working coil 210. For example, the high-frequency current is current having a frequency of 20 kHz to 1 MHz.

The working coil 210 according to an embodiment of the present disclosure may include the first and second working coils 210_1 and 210_2 having a structure shown in FIG. 3A. The working coil 210 may include the third and fourth working coils 210_3 and 210_4 having the structure shown in FIG. 3B. The structure of the working coil 210 may have a structure obtained by combining the first and second working coils 210_1 and 210_2 having the structure shown in FIG. 3A and the third and fourth working coils 210_3 and 210_4 having the structure shown in FIG. 3B. The working coil 210 according to an embodiment of the present disclosure is not limited to that shown in FIGS. 3A and 3B. The first and second working coils 210_1 and 210_2 shown in FIG. 3A and the third and fourth working coils 210_3 and 210_4 shown in FIG. 3B may have the same capacity, but may also have different capacities. For example, the configuration of the first and second working coils 210_1 and 210_2 shown in FIG. 3A and the third and fourth working coils 210_3 and 210_4 shown in FIG. 3B may be determined according to the size (or diameter) of a bottom surface of the cooking vessel 104, which is to be covered, the material of the cooking vessel 104 (e.g., magnetic material or non-magnetic material), and the maximum output power.

The magnetic field generated by the working coil 210 may pass through a lower surface (or bottom surface) of the cooking vessel 104. When a time-varying magnetic field passes through an IH metal (e.g., iron, steel, nickel, or various types of alloys, and the like) contained in the lower surface of the cooking vessel 104, a current rotating around the magnetic field may be generated in the IH metal. A rotating current is referred to as an eddy current, and a phenomenon in which a current is induced by a time-varying magnetic field is referred to as electromagnetic induction phenomenon. In the case of the cooking vessel 104, heat is generated at the lower surface of the cooking vessel 104 due to the eddy current and the resistance of the IH metal (e.g., iron). In this case, the contents of the cooking vessel 104 may be heated by the generated heat. As shown in FIG. 2, a diameter of the bottom surface of the cooking vessel 104 and a diameter of the working coil 210 may be the same or similar.

FIG. 3A is a diagram for explaining the configuration of a working coil and an inverter provided in the induction heating device 100, according to an embodiment of the present disclosure. FIG. 3A shows a case in which a working coil with a multiple concentric circular structure is placed in a single burner. For example, the multiple concentric circular structure illustrated in FIG. 3A corresponds to a case in which a first working coil (1st coil) 210_1 having a small size is placed at the center of a circular coil, and a second working coil (2nd coil) 210_2 having a larger size than the first working coil 210_1 is placed around the first working coil 210_1. The multiple concentric circular structure may also include a triple circular structure, a multiple circular structure, or the like. The triple circular structure corresponds to a case in which three working coils are arranged in order of size. The multiple concentric circular structure corresponds to a case in which N working coils are arranged in order of size.

The first and second working coils 210_1 and 210_2 provided in the induction heating device 100 may also be referred to as burners. Therefore, the first working coil 210_1 may be referred to as an inner burner, and the second working coil 210_2 may be referred to as an outer burner. In the case in which there are N working coils configured with the multiple concentric circular structure, the working coils configured with the multiple concentric circular structure may be referred to as a first burner, a second burner, ... and an Nth burner.

When the working coil 210 provided in the induction heating device 100 according to an embodiment of the present disclosure in composed of the first and second working coils 210_1 and 210_2 having a multiple concentric circular structure as shown in FIG. 3A, the induction heating device 100 according to an embodiment of the present disclosure may include first and second inverters 301_1 and 301_2. The first and second inverters 301_1 and 301_2 may be connected to the first and second working coils 210_1 and 210_2 in a one-to-one correspondence. For example, the first inverter 301_1 may be connected to the first working coil 210_1. The second inverter 301_2 may be connected to the second working coil 210_2. The first inverter 301_1 may supply current (high-frequency current) to the first working coil 210_1. The second inverter 301_2 may supply current (high-frequency current) to the second working coil 210_2. Powers output from the first and second inverters 301_1 and 301_2, respectively, may be powers supplied to the first and second working coils 210_1 and 210_2.

When the cooking vessel 104 is placed on the first and second working coils 210_1 and 210_2, the processor 310 according to an embodiment of the present disclosure may detect the powers output from the first and second inverters 301_1 and 301_2, respectively. An operation of detecting the powers output from the first and second inverters 301_1 and 301_2, respectively, by the processor 310 may also be referred to as an operation of obtaining the powers output from the first and second inverters 301_1 and 301_N, respectively, by the processor 310. To detect the powers output from the first and second inverters 301_1 and 301_2, the processor 310 may detect a voltage (voltage value) and a current (current value) output from the first and second inverters 301_1 and 301_2, respectively, and may detect (or obtain) power (power value) by multiplying the detected voltage (voltage value) and current (current value).

When the cooking vessel 104 is placed on the first and second working coils 210_1 and 210_2, the processor 310 may uniformly control the distribution of power, based on a ratio value between the powers output from the first and second inverters 301_1 and 301_2, respectively, and a set ratio value α. The set ratio value α may be a preset value. The processor 310 may detect (or obtain) a ratio value between the powers output from the first and second inverters 301_1 and 301_2, respectively. For example, the processor 310 may obtain a ratio value R1 between a first power P1 output from the first inverter 301_1 and a second power P2 output from the second inverter 301_2. In an embodiment of the present disclosure, the detected ratio value R1 may be obtained based on the first power P1. In this case, the ratio value R1 may be obtained by dividing the second power P2 by the first power P1 (R1=P2/P1). This may indicate obtaining the ratio value R1 based on the first power P1 of the inner working coil 210_1. The ratio value R1 may also be detected based on the second power P2. In this case, the ratio value R1 may be obtained by dividing the first power P1 by the second power P2 (R1=P1/P2). This may indicate obtaining the ratio value R1 based on the second power P2 of the outer working coil 210_2.

The processor 310 may compare the obtained ratio value R1 between the first power P1 and the second power P2 with the set ratio value α. As a result of the comparison, the processor 310 may determine whether the ratio value R1 between the first power P1 and the second power P2 is included in the set ratio value α. When the ratio value R1 is included in the set ratio value α, the processor 310 may determine that the distribution of powers output from the first and second inverters 301_1 and 301_2, respectively, is uniform.

When the ratio value R1 is greater than or less than the set ratio value α, the processor 310 may determine that the distribution of powers output from the first and second inverters 301_1 and 301_2, respectively, is not uniform. When the distribution of powers output from the first and second inverters 301_1 and 301_2, respectively, is not uniform, the processor 310 may control an operation of at least one of the first and second inverters 301_1 and 301_2 to uniformly control the distribution of powers output from the first and second inverters 301_1 and 301_2, respectively, according to an embodiment of the present disclosure. For example, the operation of at least one of the first and second inverters 301_1 and 301_2 may include an operation of a switching device of at least one of the first and second inverters 301_1 and 301_2. For example, the operation of the switching device may include an operation of adjusting a duty of the switching device. For example, the operation of adjusting the duty of the switching device may include an operation of reducing the duty of the switching device from 50 % to 40 %. For example, the operation of adjusting the duty of the switching device may include an operation of increasing the duty of the switching device from 20 % to 30 %. The operation of adjusting the duty of the switching device according to an embodiment of the present disclosure is not limited to the above description.

The set ratio value α according to an embodiment of the present disclosure may be a reference value for determining whether the distribution of multiple powers (e.g., the first power P1 and the second power P2) is in a uniform state (or situation). Therefore, the set ratio value α may be determined based on the state in which the distribution of multiple powers is uniform. For example, the set ratio value α may be determined based on the result of measuring the temperature of a bottom surface of the cooking vessel 104 while the cooking vessel 104 is placed on the plurality of working coils. Temperature measurement of the bottom surface of the cooking vessel 104 may be performed when the induction heating device 100 outputs the maximum output (e.g., 3700 W) for a predetermined time period (e.g., 10 minutes), but is not limited thereto.

According to an embodiment of the present disclosure, temperature measurement of the bottom surface of the cooking vessel 104 may be performed at a plurality of locations. For example, the temperature of the bottom surface of the cooking vessel 104 may be measured at locations L1 and L2 shown in FIG. 2, but the temperature of the bottom surface of the cooking vessel 104 may be measured at more locations than those shown in FIG. 2. To measure the temperature of the bottom surface of the cooking vessel 104, temperature sensors may be installed at the locations L1 and L2 of the cooking vessel 104. The temperature sensor mounted on the cooking vessel 104 may transmit the measured temperature value to the induction heating device 100 or an external device not shown (e.g., a server device, or a mobile device). The temperature sensor mounted on the cooking vessel 104 may be attachable and detachable. When the temperature sensor mounted on the cooking vessel 104 is detachable, the temperature sensor may be attached to the cooking vessel 104 only when measuring the temperature of the bottom surface of the cooking vessel 104.

According to an embodiment of the present disclosure, temperature measurement of the bottom surface of the cooking vessel 104 may be performed by using a thermal imaging camera. When the thermal imaging camera is used, the processor 310 of the induction heating device 100 may receive a thermal image obtained from the thermal imaging camera and analyze the received thermal image to obtain temperature values at the locations L1 and L2 shown in FIG. 2. For example, the thermal imaging camera may be installed on at least one of the top, a side, or interior of the cooking vessel 104, but the installation location is not limited thereto.

When the working coil 210 shown in FIG. 2 has a structure as shown in FIG. 3A, the location L1 may be the bottom surface of the cooking vessel 104 affected by output of the outer working coil 210_2, and the location L2 may be the bottom surface of the cooking vessel 104 affected by output of the inner working coil 210_1. In this case, a diameter of the bottom surface of the cooking vessel 104 (e.g., 280 mm) and a diameter of the working coil 210 may be the same or similar.

The processor 310 of the induction heating device 100 according to an embodiment of the present disclosure may obtain a temperature value t1 at the location L1 through the temperature sensor mounted at the location L1 of the cooking vessel 104. The processor 310 may obtain a temperature value t2 at the location L2 through the temperature sensor mounted at the location L2 of the cooking vessel 104. The processor 310 may obtain a difference value △t=t1-t2 between the temperature value t1 at the location L1 and the temperature value t2 at the location L2. The processor 310 may also periodically (e.g., every minute) obtain the temperature values t1 and t2, and the difference value △t. When the temperature values t1 and t2, and the difference value △t are periodically obtained, the processor 310 may also obtain an average value of the difference value △t obtained periodically over a predetermined time period (e.g., 10 minutes). When the temperature values t1 and t2 and the difference value △t are periodically obtained, the processor 310 may obtain an average value of the temperature values t1 and t2 obtained periodically for a predetermined time period (e.g., 10 minutes), and obtain the difference value △t by using the average value of t1 and the average value of t2. The processor 310 may also aperiodically obtain the temperature values t1 and t2, and the difference value △t.

After the difference value △t between temperatures is obtained, the induction heating device 100 according to an embodiment of the present disclosure may determine whether the temperature of the bottom surface of the cooking vessel 104 is uniform. To this end, the processor 310 of the induction heating device 100 may compare the obtained difference value △t with the set temperature value. The set temperature value may be determined based on a material of the cooking vessel 104, a state of the bottom surface of the cooking vessel 104 (e.g., whether the bottom surface is flat or has scratches on the bottom surface), and/or whether a diameter of the bottom surface of the cooking vessel 104 and a diameter of the working coil on which the cooking vessel 104 is placed are the same or the like, but is not limited thereto. For example, a set temperature value may be 5 °C, but a reference temperature value may be 15 °C depending on the material of the cooking vessel 104, the state of the bottom surface of the cooking vessel 104, and/or whether the diameter of the bottom surface of the cooking vessel 104 and the diameter of the working coil on which the cooking vessel 104 is placed are the same. The set temperature value is not limited to the examples described above and may be preset.

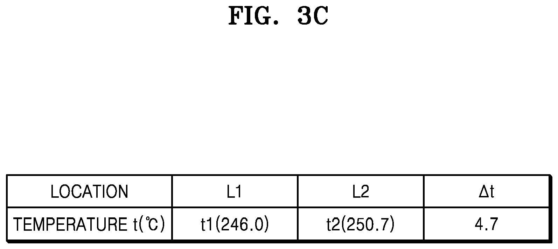

FIG. 3C shows an example of a plurality of temperature values of the cooking vessel 104, obtained by the processor 310 of the induction heating device 100, and a difference value between the obtained plurality of temperature values, according to an embodiment of the present disclosure.

As shown in FIG. 3C, when the temperature value t1 at the location L1 of the cooking vessel 104 is obtained as 246.0 °C by the processor 310 and the temperature value t2 at the location L2 of the cooking vessel 104 is obtained as 250.7 °C, the difference value △t between t1 and t2 is obtained as 4.7 °C. In this case, when the set temperature value is 5 °C, the difference value △t between t1 and t2, which is 4.7 °C, is less than the set temperature value of 5 °C, and thus the processor 310 may determine that the temperature of the bottom surface of the cooking vessel 104 is uniform. A state in which the temperature of the bottom surface of the cooking vessel 104 is uniform may indicate a state of uniform distribution of the output of the plurality of working coils 210_1 and 210_2 on which the cooking vessel 104 is placed. The state in which the distribution of outputs of the plurality of working coils 210_1 and 210_2 is uniform may indicate a state in which the distribution of powers output from the first and second inverters 301_1 and 301_2 corresponding to the plurality of working coils 210_1 and 210_2 is uniform.

When it is determined that the temperature of the bottom surface of the cooking vessel 104 is uniform, the processor 310 according to an embodiment of the present disclosure may obtain output power P1 of the first inverter 301_1 (or output power of the first working coil 210_1) and output power P2 of the second inverter 301_2 (or output power of the second working coil 210_2). The processor 310 may obtain a ratio value between the obtained output power P1 of the first inverter 301_1 and the obtained output power P2 of the second inverter 301_2.

For example, when the obtained output power P1 of the first inverter 301_1 is 2017 W and the obtained output power P2 of the second inverter 301_2 is 1670 W, the processor 310 may obtain a ratio value between the output power P1 (2017 W) of the first inverter 301_1 and the output power P2 (1670 W) of the second inverter 301_2 as P1:P2=1:0.83 based on the output power P1 (2017 W) of the first inverter 301_1. In this case, the set ratio value α may be 0.83.

For example, the processor 310 may obtain a ratio value between the output power P1 (2017 W) of the first inverter 301_1 and the output power P2 (1670 W) of the second inverter 301_2 as P1:P2=1.2:1 based on the output power P2 (1670 W) of the second inverter 301_2. In this case, the set ratio value α may also be 1.2.

In addition, regardless of the temperature measurement operation on the bottom surface of the cooking vessel 104, when a ratio value between the output power P1 of the first inverter 301_1 and the output power P2 of the second inverter 301_2 is 1:1, the distribution of the output power P1 of the first inverter 301_1 and the output power P2 of the second inverter 301_2 may be uniform. In this case, the set ratio value α may also be 1.

Accordingly, the induction heating device 100 is not limited to a state in which the distribution of the powers P1 and P2 output from the plurality of inverters 301_1 and 301_2 corresponding to the plurality of working coils 210_1 and 210_2 on which the cooking vessel 104 is placed is uniform, but may be expanded to a state in which P1:P2=1:0.83, P1:P2=1:1, or P1:P2=1:1.2 depending on a condition between the induction heating device 100 and the cooking vessel 104. Thus, the induction heating device 100 may expand a range in which the distribution of the powers P1 and P2 output from the plurality of inverters 301_1 and 301_2 can be determined to be uniform.

The processor 310 according to an embodiment of the present disclosure may store the set ratio value α in memory 320 and may be used to uniformly control the distribution of powers output from the first inverter 301_1 and the second inverter 301_2, respectively. For example, when the set ratio value α stored in the memory 320 is 1, the processor 310 may determine whether the distribution of powers output from the first inverter 301_1 and the second inverter 301_2, respectively, is uniform by using the set ratio value α of 1. For example, when the set ratio value α stored in the memory 320 is 0.83, the processor 310 may determine whether the distribution of powers output from the first inverter 301_1 and the second inverter 301_2, respectively, is uniform by using the set ratio value α of 0.83. For example, when the set ratio value α stored in the memory 320 is 1.2, the processor 310 may determine whether the distribution of powers output from the first inverter 301_1 and the second inverter 301_2, respectively, is uniform by using the set ratio value α of 1.2. For example, when the set ratio value α stored in the memory 320 is 0.83, 1, and 1.2, the processor 310 may determine whether the distribution of powers output from the first inverter 301_1 and the second inverter 301-2, respectively, is uniform by selecting one of 0.83, 1, and 1.2 as the set ratio value α stored in the memory 320 according to a condition of the cooking vessel 104 (e.g., material, size of the bottom surface, or the like). To this end, information mapping between condition information of the cooking vessel 104 and the plurality of set ratio values α is stored in the memory 320 and may be used by the processor 310 to select the set ratio value α.

The set ratio value α may not be determined by the processor 310, but may be determined by experiment when the induction heating device 100 is manufactured. The set ratio value α determined by the experiment may be stored in the memory 320 and then read and used by the processor 310. The set ratio value α according to an embodiment of the present disclosure may be defined as ± an error value. In this case, the set ratio value α may also be expressed as a set minimum ratio value αₘᵢₙ ≤ α ≤ a set maximum ratio value αₘₐₓ.

The duty of the switching device according to an embodiment of the present disclosure may be expressed as a percentage of a ratio of an on-state time period of the switching device (time when the switching device is turned on). The duty is used to control an operation of the switching device. The processor 310 may obtain the duty of the switching device as (on-state time period of the switching device) / (period of the switching device). When the duty of the switching device is reduced by the processor 310 (when the duty is lowered), the powers output from the inverter may be reduced. When the duty of the switching device is increased by the processor 310 (when the duty is raised), the powers output from the inverter may be increased.

For example, when the ratio value R1 between the first power P1 output from the first inverter 301_1 and the second power P2 output from the second inverter 301_2 is greater than or less than the set ratio value α, and the first power P1 is high (high output) among the first power P1 and the second power P2, the processor 310 may control the first inverter 301_1 such that the duty of the switching device provided in the first inverter 301_1 is reduced. Accordingly, the distribution of the first power P1 output from the first inverter 301_1 and the second power P2 output from the second inverter 301_2 may become uniform. The uniform distribution of the first power P1 and the second power P2 may indicate a state in which the ratio value R1 between the first power P1 and the second power P2 is included in the set ratio value α. As such, the distribution of the first power P1 and the second power P2 becomes uniform, heat distribution between the first working coil 210_1 and the second working coil 210_2 may become uniform. Accordingly, the thermal efficiency of the induction heating device 100 may be improved.

When the ratio value R1 between the first power P1 output from the first inverter 301_1 and the second power P2 output from the second inverter 301_2 is greater than or less than the set ratio value α, and the second power P2 is low (low output) among the first power P1 and the second power P2, the processor 310 may control an operation of the second inverter 301_2 such that the duty of the switching device provided in the second inverter 301_2 is increased. For example, when the first power P1 is high (high output) among the first power P1 and the second power P2, but a duty of the switching device provided in the first inverter 301_1 and the second inverter 301_2 is low (e.g., duty = 0.2), the processor 310 may control the operation of the second inverter 301_2 such that the duty of the switching device provided in the second inverter 301_2 which outputs low power is increased (e.g., duty = 0.4). Accordingly, the distribution of the first power P1 output from the first inverter 301_1 and the second power P2 output from the second inverter 301_2 may become uniform.

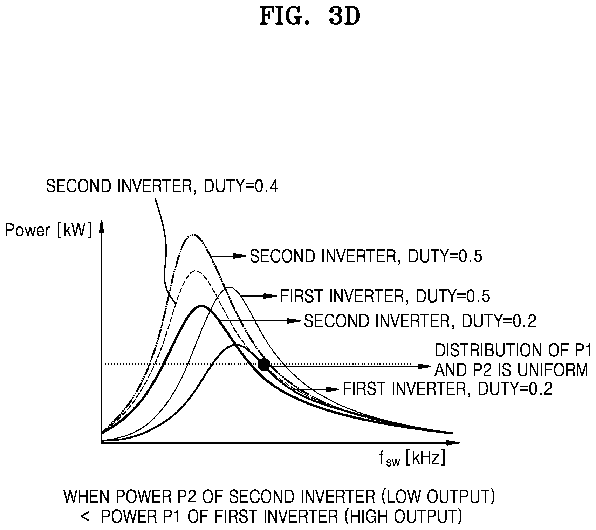

FIG. 3D illustrates an example of power waveforms of the first inverter 301_1 and the second inverter 301_2 in the induction heating device 100, according to an embodiment of the present disclosure. FIG. 3D illustrates an example of power waveforms in which a duty of a switching device provided in the second inverter 301_2 that outputs low power is increased to 0.4 to equalize power distribution when the switching devices provided in the first inverter 301_1 and the second inverter 301_2 are 0.2.

When the ratio value R1 between the first power P1 output from the first inverter 301_1 and the second power P2 output from the second inverter 301_2 is greater than or less than the set ratio value α, the processor 310 may control an operation of the second inverter 301_2 such that a duty of the switching device provided in the second inverter 301_2 that outputs low power (or low output) is increased and control an operation of the first inverter 301_1 such that a duty of the switching device provided in the first inverter 301_1 that outputs high power (or high output) is decreased. Accordingly, the distribution of the first power P1 and the second power P2 may also be uniform. An operation of decreasing the duty of the switching device provided in the first inverter 301_1 while increasing the duty of the switching device provided in the second inverter 301_1 may be performed when duties of the switching devices provided in the first inverter 301_1 and the second inverter 301_2 are both 0.5 or less, but is not limited thereto.

At least one instruction or at least one program that is to be executed by the processor 310 may be stored in the memory 320. The at least one instruction or the at least one program may include at least one instruction related to an operation of uniformly controlling power distribution, which may be performed by the induction heating device 100 according to an embodiment of the present disclosure. Data or information (e.g., the set ratio value α, and connection information between an inverter and a working coil (e.g., information indicating that the first inverter 301_1 is connected to the first working coil 210_1), a set temperature value, and a set phase value θₗᵢₘᵢₜ) which is necessary for performing the operation of uniformly controlling power distribution according to an embodiment of the present disclosure may be stored in the memory 320. The processor 310 and the memory 320 will be described in more detail with reference to FIG. 5 to be described below.

FIG. 3B is a diagram for explaining the configuration of a working coil and an inverter provided in the induction heating device 100, according to an embodiment of the present disclosure. FIG. 3B shows a case in which one working coil having a circular structure is placed per burner. For example, a third working coil (3rd coil) 210_3 of FIG. 3B may correspond to the second burner 102, and a fourth working coil (4th coil) 210_4 may correspond to the third burner 103. The size of the third working coil 210_3 shown in FIG. 3B may be the same as the size of the fourth working coil 210_4 shown in FIG. 3B, but may also be different.

A third inverter 301_3 shown in FIG. 3B may be connected to the third working coil 210_3, and a fourth inverter 301_4 may be connected to the fourth working coil 210_4. Accordingly, the third inverter 301_3 may supply current (high-frequency current) to the third working coil 210_3. The fourth inverter 301_4 may supply current (high-frequency current) to the fourth working coil 210_4. Powers output from the third and fourth inverters 301_3 and 301_4, respectively, may be powers applied to the third and fourth working coils 210_3 and 210_4.

For convenience of explanation, the third working coil 210_3, the fourth working coil 201_4, the third inverter 301_3, and the fourth inverter 301_4 shown in FIG. 3B are given different reference numerals than the first working coil 201_1, the second working coil 201_2, the first inverter 301_1, and the second inverter 301_2 shown in FIG. 3A, but may have the same specifications (e.g., size of the working coil) or different specifications.

When the cooking vessel 104 is placed on the third and fourth working coils 210_3 and 210_4, the processor 310 illustrated in FIG. 3B may obtain (or detect) third and fourth powers P3 and P4 output from the third and fourth inverters 301_3 and 301_4, respectively, as described with reference to FIG. 3A. When the processor 310 obtains the third and fourth powers P3 and P4 output from the third and fourth inverters 301_3 and 301_4, respectively, the processor 310 may obtain the ratio value R1 between the obtained third and fourth powers P3 and P4. For example, the processor 310 may obtain the ratio value R1 between the third power P3 output from the third inverter 301_3 and the fourth power P4 output from the fourth inverter 301_4 based on the third power P3 (R1=P4/P3).

The processor 310 may compare the detected ratio value R1 with the set ratio value α. The set ratio value α may be a value determined based on a state in which the distribution of the third power P3 and the fourth power P4 is uniform, and may be determined as described with reference to FIG. 3A.

When the obtained ratio value R1 is greater than or less than the set ratio value α, the processor 310 may perform an operation of uniformly controlling the distribution of the third power P3 and the fourth power P4 by adjusting a duty of the switching device provided in at least one of the third inverter 301_3 and the fourth inverter 301_4 such that the ratio value R1 is included in the set ratio value α. The operation of adjusting the duty of the switching device provided in at least one of the third inverter 301_3 and the fourth inverter 301_4 may be performed in the same or similar manner as the operation of adjusting the duty of the switching device provided in at least one of the first inverter 301_1 and the second inverter 301_2 described with reference to FIG. 3A. Accordingly, the processor 310 may uniformly control the distribution of powers output from the third inverter 301_3 and the fourth inverter 301_4. When the distribution of the third power P3 output from the third inverter 301_3 and the fourth power P4 output from the fourth inverter 301_4 becomes uniform, heat distribution between the third working coil 210_3 and the fourth working coil 210_4 may become uniform. Accordingly, the thermal efficiency of the induction heating device 100 may be improved.

At least one instruction or at least one program that is to be executed by the processor 310 may be stored in the memory 320 shown in FIG. 3B. Data or information (e.g., the set ratio value α, and connection information between an inverter and a working coil (e.g., information indicating that the first inverter 301_1 is connected to the first working coil 210_1), a set temperature value, and a set phase value θₗᵢₘᵢₜ) which is necessary for performing the operation of controlling power distribution according to an embodiment of the present disclosure may be stored in the memory 320. The processor 310 and the memory 320 will be described in more detail with reference to FIG. 5 to be described below.

FIG. 4 is a detailed circuit diagram of an inverter and a working coil provided in the induction heating device 100, according to an embodiment of the present disclosure.

Referring to FIG. 4, an input power supply 401 is an alternating current (AC) power supply. An electromagnetic interference (EMI) filter 402 may output AC power (AC power including AC voltage and AC current) that blocks (absorbs or reflects) high-frequency noise (or EMI) generated from the AC power supplied from the input power supply 401. Accordingly, the induction heating device 100 may be protected from EMI.

The AC power output from the EMI filter 402 is converted into direct current (DC) power by a rectifier circuit 403. The rectifier circuit 403 may include a bridge diode as shown in FIG. 4, but a thyristor or other type of switching device may also be used. The DC power output from the rectifier circuit 403 may be smoothed by first and second DC link capacitors 404_1 and 404_2.

The DC power smoothed by the first DC link capacitor 404_1 may be delivered to the first inverter 301_1, and the DC power smoothed by the second DC link capacitor 404_2 may be delivered to the second inverter 301_2. The first inverter 301_1 and the second inverter 301_1 may each convert the applied DC power into high-frequency power and supply the converted high-frequency power to the first working coil 210_1 and the second working coil 210_2. Although FIG. 4 shows the first and second DC link capacitors 404_1 and 404_2 as components independent of the first inverter 301_1 and the second inverter 301_2, the first inverter 301_1 may include the first DC link capacitor 404_1 and the second inverter 301_2 may include the second DC link capacitor 404_2.

The first inverter 301_1 may supply high-frequency power to the first working coil 210_1 via switching operations of SW1 405_1 and SW2 405_2 by using the DC power smoothed by the first DC link capacitor 404_1. The SW1 405_1 and the SW2 405_2 may control the switching operation by using a pulse width modulation (PWM) signal provided by the processor 310 to control the magnitude of the power output from the first inverter 301_1. According to an embodiment of the present disclosure, the magnitude of the voltage and current of the signals output from the SW1 405_1 and SW2 405_2 may be controlled by controlling the duty of the PWM signal. Controlling the magnitude of the voltage and current of the signals output from the SW1 405_1 and the SW2 405_2 may be interpreted as controlling the magnitude of the power output from the first inverter 301_1. For example, when the duty of the PWM signal is reduced, the first power P1 output from the first inverter 301_1 may be reduced. For example, when the duty of the PWM signal is increased, the first power P1 output from the first inverter 301_1 may be increased.

The first working coil 210_1 may generate a magnetic field through resonance between a resonant capacitor 1 411_1 and a resonant capacitor 2 411_2. The magnetic field generated in the first working coil 210_1 may generate eddy currents in the cooking vessel 104 for IH placed above the first working coil 210_1. Accordingly, the contents of the cooking vessel 104 are heated. CT1 410_1 is a first current detector (or current detection sensor) for detecting the current flowing in the first working coil 210_1. The processor 310 may detect the current flowing in the CT1 410_1 to identify (or determine) whether the cooking vessel 104 is placed on a burner corresponding to the first working coil 210_1.

The second inverter 301_1 may supply high-frequency power to the second working coil 210_2 via switching operations of SW3 405_3 and SW4 405_4 by using the DC power smoothed by the second DC link capacitor 404_2. The processor 310 may control the switching operation of the SW3 405_3 and the SW4 405_4 by using a pulse width modulation (PWM) signal to control the magnitude of the power output from the second inverter 301_2. Controlling the switching operation of the SW3 405_3 and the SW4 405_4 by using a PWM signal may mean an operation of controlling the magnitude of the voltage and current of the signals output from the SW3 405_3 and the SW4 405_4.

The processor 310 may control frequencies of the first inverter 301_1 and the second inverter 301_2 by controlling a period of the PWM. For example, the processor 310 may increase the powers output from the first inverter 301_1 and the second inverter 301_2 by reducing the frequency and increasing the PWM period. For example, the processor 310 may reduce the powers output from the first inverter 301_1 and the second inverter 301_2 by reducing the frequency and increasing the PWM period.

A magnetic field may be generated in the second working coil 210_2 by resonance between a resonant capacitor 3 411_3 and a resonant capacitor 4 411_4. The magnetic field generated in the second working coil 210_2 generates eddy currents in the cooking vessel 104 for IH placed above the second working coil 210_2. Accordingly, the contents of the cooking vessel 104 are heated. CT2 410_2 is a second current detector (or current detection sensor) for detecting the current flowing in the second working coil 210_2. The processor 310 may detect the current flowing in the CT2 410_2 to identify (or determine) whether the cooking vessel 104 is placed on a burner corresponding to the second working coil 210_1.

The voltage across both end points 406 and 407 of the SW2 405_2 shown in FIG. 4 may be a voltage corresponding to the first power P1 output from the first inverter 301_1, and may be referred to as a pole voltage of the first inverter 301_1. The pole voltage refers to a voltage difference between positive and negative poles. The voltage across both ends 408 and 409 of the SW4 405_4 shown in FIG. 4 may be a voltage corresponding to the second power P2 output from the second inverter 301_2, and may be referred to as a pole voltage of the second inverter 301_2.

The components shown in FIG. 4 are an example based on the first inverter 301_1 and the second inverter 301_2, but the component shown in FIG. 4 may also be shown based on N inverters. In this case, N first working coils 210_1 and N second working coils 210_2 shown in FIG. 4 are also provided, and N first current detectors (CT1) 410_1 and second current detectors (CT2) 410_2 may also be provided.

The third inverter 301_3 and the fourth inverter 301_4 shown in FIG. 3B may be configured as the first inverter 301_1 and the second inverter 301_2 shown in FIG. 4.

According to an embodiment of the present disclosure, after adjusting the duty of the switching devices SW1, SW2, SW3, and SW4 provided in at least one of the first inverter 301_1 and the second inverter 301_2, when the ratio value R1 is included in the set ratio value α, the processor 310 may stop an operation of adjusting the duty of the switching devices SW1, SW2, SW3, and SW4. For example, when the duty of the switching devices SW1 and SW2 is adjusted, if the ratio value R1 is included in the set ratio value α, the processor 310 may stop the operation of adjusting the duty of the switching devices SW1 and SW2. For example, when the duty of the switching devices SW3 and SW4 is adjusted, if the ratio value R1 is included in the set ratio value α, the processor 310 may stop the operation of adjusting the duty of the switching devices SW3 and SW4. For example, when the duty of the switching devices SW1, SW2, SW3, and SW4 is adjusted, if the ratio value R1 is included in the set ratio value α, the processor 310 may stop the operation of adjusting the duty of the switching devices SW1, SW2, SW3, and SW4.

The processor 310 according to an embodiment of the present disclosure may obtain a first phase angle θ1 by using a waveform of the current supplied from the first inverter 301_1 to the first working coil 210_1 and a waveform of the voltage supplied from the first inverter 301_1 to the first working coil 210_1. The processor 310 may obtain a second phase angle θ2 by using a waveform of the current supplied from the second inverter 301_2 to the second working coil 210_2 and a waveform of the voltage supplied from the second inverter 301_2 to the second working coil 210_2. When at least one of the first phase angle θ1 and the second phase angle θ2 is less than or equal to the set phase value θₗᵢₘᵢₜ, the processor 310 may increase the duty of the switching device provided in the inverter in which a phase angle less than or equal to the set phase value θₗᵢₘᵢₜ is obtained. For example, when the first phase angle θ1 is less than or equal to the set phase value θₗᵢₘᵢₜ, the processor 310 may increase the duty of the switching device provided in the first inverter 301_1. For example, when the second phase angle θ2 is less than or equal to the set phase value θₗᵢₘᵢₜ, the processor 310 may increase the duty of the switching device provided in the second inverter 301_2. Accordingly, a phase margin may be ensured between a current waveform and a voltage waveform supplied to the working coil, and thus a switching device provided in an inverter may be prevented from being burned out according to a zero current switching (ZCS) operation. The ZCS operation may represent an operation in which the current becomes zero when the switching device provided in the inverter is switched. When the current of the switching device does not become zero during the ZCS operation, the switching device may be burned out.

The processor 310 according to an embodiment of the present disclosure may obtain a phase angle θ by using a waveform of an output voltage and a waveform of an output current of an inverter that outputs high power. The processor 310 may increase the duty of the switching device provided in the inverter that outputs high power when the obtained phase angle θ is less than or equal to the set phase value θₗᵢₘᵢₜ. For example, when the first inverter 301_1 outputs high power, the processor 310 may obtain the phase angle θ by using the waveform of the output voltage and the waveform of the output current of the first inverter 301_1. The processor 310 may increase the duty of the switching device provided in the first inverter 301_1 when the obtained phase angle θ is less than or equal to the set phase value θₗᵢₘᵢₜ. For example, when the second inverter 301_2 outputs high power, the processor 310 may obtain the phase angle θ by using the waveform of the output voltage and the waveform of the output current of the second inverter 301_2. The processor 310 may increase the duty of the switching device provided in the second inverter 301_2 when the obtained phase angle θ is less than or equal to the set phase value θₗᵢₘᵢₜ. Accordingly, a phase margin between the current waveform and the voltage waveform supplied to the working coil corresponding to the high-power output inverter may be ensured, and thus the switching device provided in the inverter that outputs high power may be prevented from being burned out according to a ZCS operation.

The processor 310 according to an embodiment of the present disclosure may perform an operation of adjusting a duty of a switching device by using the ratio value R1 and the set ratio value α when a sum Pₜₒₜₐₗ between the first power P1 and the second power P2 is greater than or equal to a set power P_{x.} The set power Pₓ represents power in which the sum of the first power P1 and the second power P2 is low power (e.g., 1kw) and represents power that is in a state with uniform power distribution from a plurality of inverters (e.g., the first inverter 301_1 and the second inverter 301_2) and does not reach a command power P_{ref.} The command power P_{ref} is power set according to user input. For example, when power to be set according to user input is 1 to 15 levels, 15 command powers corresponding to the respective 1 to 15 levels may be set.

FIG. 5 is a block diagram of the induction heating device 100 according to an embodiment of the present disclosure.

As illustrated in FIG. 5, the induction heating device 100 according to an embodiment of the present disclosure may include an induction heater 510, the processor 310, the communication interface 530, the user interface 540, and the memory 320.

The induction heater 510 may include the driver 520 and the working coil 210, but is not limited thereto. The driver 520 may receive power from the input power supply 401 and supply current to the working coil 210 according to a control signal of the processor 310. The driver 520 may include the electromagnetic interference (EMI) filter 402, the rectifier circuit 403, the first inverter 301_1, the second inverter 301_2, and the current detector 410, but is not limited thereto. For example, the current detector 410 provided in the driver 520 may be represented as the first current detector 410_1 (CT1) and the second current detector 410_2 (CT2).

According to an embodiment of the present disclosure, the driver 520 may be called an inverter in a broad sense. When the driver 520 is referred to as an inverter, the first inverter 301_1 and the second inverter 301_2 shown in FIG. 5 may represent a configuration that includes only switching devices SW1 to SW4 that perform a switching operation to supply current to the first working coil 210_1 and the second working coil 210_2 provided in the working coil 210 as shown in FIG. 4. The powers output from the first inverter 301_1 and the second inverter 301_2 described in an embodiment of the present disclosure may refer to the powers applied to the first working coil 210_1 and the second working coil 210_2 provided in the working coil 210.

The EMI filter 402 may block high-frequency noise (or electromagnetic interference) contained in AC power supplied from the input power supply 401 and may pass AC voltage and AC current of a predetermined frequency (e.g., 50 Hz or 60 Hz). A fuse and a relay may be provided between the EMI filter 402 and the input power supply 401 to block overcurrent. The AC power, with high-frequency noise blocked by the EMI filter 402, is supplied to the rectifier circuit 403.

The rectifier circuit 403 may convert AC power into DC power. For example, the rectifier circuit 403 may convert an AC voltage of which magnitude and polarity (positive voltage or negative voltage) change over time into a DC voltage with constant magnitude and polarity, and an AC current of which magnitude and direction (positive current or negative current) change over time into a DC current of which polarity does not change over time. The rectifier circuit 403 may include a bridge diode as a device for rectification. For example, the rectifier circuit 403 may include four diodes. The bridge diode may convert an AC voltage with changing polarity over time into a positive voltage with constant polarity, and an AC current with changing direction over time into a positive current with constant direction. The rectifier circuit 403 may be connected to the first and second DC link capacitors 404_1 and 404-2 that smooth the rectified DC voltage.

The first inverter 301_1 may include a switching circuit that supplies or blocks current (high-frequency current) to the first working coil 210_1. The first inverter 301_1 may include the resonant capacitors 411_1 and 411-2 that resonate together with the switching device and the first working coil 210_1. The switching circuit may include two switches per burner. For example, the first inverter 301_1 may include the first switch SW1 405_1 and the second switch SW2 405_2 for the first burner 101. The first switch SW1 405_1 and the second switch SW2 405_2 may be connected in series between a positive line and a negative line output from the rectifier circuit 403. The first switch SW1 405_1 and the second switch SW2 405_2 may be turned on or turned off according to a control signal (PWM signal) of the processor 310. In an embodiment, the induction heating device 100 may include a separate driving processor in addition to the processor 310 to generate the control signal.

The second inverter 301_2 may include a switching circuit that supplies or blocks current (high-frequency current) to the second working coil 210_2. The second inverter 301_2 may include the resonant capacitors 411_3 and 411_4 that resonate together with the switching device and the second working coil 210_2. The switching circuit may include two switches per burner. For example, the second inverter 301_2 may include the third switch SW3 405_3 and the fourth switch SW4 405_4 for the second burner 102. The third switch SW3 405_3 and the fourth switch SW4 405_4 may be connected in series between a positive line and a negative line output from the rectifier circuit 403. The third switch SW3 405_3 and the fourth switch SW4 405_4 may be turned on or turned off according to a control signal (PWM signal) of the processor 310. In an embodiment, the induction heating device 100 may include a separate driving processor in addition to the processor 310 to generate the control signal.

The first inverter 301_1 may control the current supplied to the first working coil 210_1. For example, the magnitude and direction of the current flowing in the first working coil 210_1 may change depending on whether the first switch SW1 405_1 and the second switch SW2 405_2 provided in the first inverter 301_1 are turned on or off. The magnitude and direction of the current flowing in the second working coil 210_2 may change depending on whether the third switch SW3 405_3 and the fourth switch SW4 405_4 provided in the second inverter 301_2 are turned on or off. In this case, a high-frequency current (high-frequency AC current) may be supplied to the first working coil 210_1 and the second working coil 210_2.

High-frequency current may be supplied to the first working coil 210_1 according to the switching operation of the first switch SW1 405_1 and the second switch SW2 405_2. The turn-on or turn-off of the first switch SW1 405_1 and the second switch SW2 405_2 may be controlled via a pulse width modulation (PWM) method. According to an embodiment of the present disclosure, the processor 310 may control the magnitude of the high-frequency current applied to the first working coil 210_1 by adjusting the duty of a PWM signal for controlling the turn-on or turn-off state of the first switch SW1 405_1 and the second switch SW2 405_2. For example, when the duty of the PWM signal applied to the first switch SW1 405_1 and the second switch SW2 405_2 is increased, the magnitude of the high-frequency current applied to the first working coil 210_1 may be increased. An increase in the magnitude of the high-frequency current applied to the first working coil 210_1 means that the high-frequency power applied to the first working coil 210_1 increases. For example, when the duty of the PWM signal applied to the first switch SW1 405_1 and the second switch SW2 405_2 is reduced, the magnitude of the high-frequency current applied to the first working coil 210_1 may be reduced. Control of the duty of the PWM signal may include adjusting a ratio of the time during which the switching device is maintained in an on state. Adjustment of the duty of the PWM signal may include adjusting the magnitude of the power output from the first inverter 301_1.

The processor 310 may control a frequency of the first inverter 301_1 to control the magnitude of the power output from the first inverter 301_1. For example, the processor 310 may control the magnitude of the power output from the first inverter 301_1 by controlling a period of a PWM signal for turning on or off the first switch SW1 405_1 and the second switch SW2 405_2 of the first inverter 301_1. Controlling the period of the PWM signal may be represented as controlling a frequency of the first inverter 301_1. When the period of the PWM signal is increased, the frequency of the first inverter 301_1 may decrease, and the power output from the first inverter 301_1 may increase. When the processor 310 reduces the period of the PWM signal, the frequency of the first inverter 301_1 may increase, and the power output from the first inverter 301_1 may decrease.

As a switching frequency decreases (e.g., as switching frequencies of the first switch SW1 405_1 and the second switch SW2 405_2 decrease), the current supplied to the first working coil 210_1 may increase, and the strength of the magnetic field output by the first working coil 210_1 (output of the induction heating device 100) may increase. A low switching frequency may indicate a long switching period. Although the above description is given in terms of the first switch SW1 405_1, the second switch SW2 405_2, and the first working coil 210_1, the operations of the second working coil 210_2, the third switch SW3 405_3, and the fourth switch SW4 405_4 may also be performed in the same way.

The current detector 410 may include the first current detector CT1 410_1 that measures the current output from the first inverter 301_1 and flowing in the first working coil 210_1 and the second current detector CT2 410_2 that measures the current flowing in the second working coil 210_2 output from the second inverter 301_2. The first current detector CT1 410_1 and the second current detector CT2 410_2 may transmit an electrical signal corresponding to the measured current value to the processor 310. Although not illustrated, the induction heating device 100 may include not only the current detector 410 but also a voltage detector (not illustrated) that senses the voltage of the working coil 210.

The processor 310 may determine a switching frequency (turn-on/turn-off frequency) of the switching device provided in the first inverter 301_1 and the switching device provided in the second inverter 301_2 based on output strength (power level or command power) of the induction heating device 100. The processor 310 may generate a control signal (PWM signal) for turning on/off the switching device according to the determined switching frequency. The induction heating device 100 may include a driving processor separate from the processor 310 to control the operation of the induction heater 510 during the operation of the processor 310.

The processor 310 controls the overall operation of the induction heating device 100. The processor 310 may execute programs or at least one instruction stored in the memory 320 to control the induction heater 510, the communication interface 530, the user interface 540, and the memory 320. The induction heating device 100 may include at least one processor. For example, the processor 310 may be one or a plurality. The induction heating device 100 may include only a main processor, or may include a main processor and at least one sub-processor.

According to an embodiment of the present disclosure, the induction heating device 100 may include an artificial intelligence (AI) processor. The AI processor may be manufactured in the form of a dedicated hardware chip for artificial intelligence (AI), or may be manufactured as a portion of an existing general-purpose processor (e.g., CPU or application processor) or a graphics-dedicated processor (e.g., GPU) and mounted on an induction heating device 100.

When unique identification information of the cooking vessel 104 is stored in the memory 320, the processor 310 may establish a short-range wireless communication channel (e.g., a BLE communication channel) with the cooking vessel 104 through the communication interface 530.

The processor 310 may uniformly control the distribution of power (high-frequency power) output from the first and second inverters 301_1 and 301_2. In an embodiment, when the ratio value R1 between the first power P1 output from the first inverter 301_1 and the second power P2 output from the second inverter 301_2 is greater than or less than the set ratio value α, the duty of the switching device provided in at least one of the first inverter 301_1 and the second inverter 301_2 may be adjusted to uniformly control the distribution of the first power P1 and the second power P2.

For example, the processor 310 may reduce the duty of the switching device provided in the inverter that outputs high power among the first inverter 301_1 and the second inverter 302_2 to include the ratio value R1 in the set ratio value α. When the duty of the switching device provided in the inverter that outputs high power is reduced, the processor 310 may synchronize a frequency of the inverter that outputs high power with a frequency of the inverter that outputs low power. For example, the processor 310 may increase the duty of the switching device provided in the inverter that outputs low power between the first inverter 301_1 and the second inverter 302_2 to include the ratio value R1 in the set phase value α. For example, the processor 310 may reduce the duty of the switching device provided in the inverter that outputs high power among the first inverter 301_1 and the second inverter 302_2, and increase the duty of the switching device provided in the inverter that outputs low power among the first inverter 301_1 and the second inverter 302_2, and thus the ratio value R1 is included in the set phase value α.

The processor 310 according to an embodiment of the present disclosure may stop an operation of adjusting the duty of the switching device when the ratio value R1 is included in the set ratio value α after the duty of the switching device is adjusted. In this case, when the total sum of the first power P1 and the second power P2 output from the first inverter 301_1 and the second inverter 302_2 does not reach the command power P_{ref}, the processor 310 may control frequencies of the first inverter 301_1 and the second inverter 302_2 such that the total sum of the first power P1 and the second power P2 reaches the command power P_{ref}. When the total sum of the first power P1 and the second power P2 output from the first inverter 301_1 and the second inverter 302_2 reaches the command power P_{ref}, the processor 310 may maintain a control state for the first inverter 301_1 and the second inverter 302_2.

The processor 310 may also execute at least one program stored in the memory 320. The processor 310 may execute at least one instruction stored in the memory 320 to perform a control method of the induction heating device 100 according to an embodiment of the present disclosure. The processor 310 may be electrically connected to the components provided in the induction heating device 100. The processor 310 may be electrically connected to the components provided in the induction heating device 100, through a bus (not shown). The processor 310 may also control the components provided in the induction heating device 100. For example, the processor 310 may control the induction heater 510, the communication interface 530, the user interface 540, and the memory 320. For example, the processor 310 may perform the operations described with reference to FIGS. 6 to 16 to be described below or modified examples of the operations.

The processor 310 may include at least one of a central processing unit (CPU), a graphics processing unit (GPU), an accelerated processing unit (APU), a many integrated core (MIC), a digital signal processor (DSP), or a neural processing unit (NPU). The processor 310 may be implemented in the form of an integrated system-on-chip (SoC) including one or more electronic components. Each processor 310 may be implemented as separate hardware (H/W). The processor 310 may also be represented as a microprocessor controller (MICOM), a micro processor unit (MPU), or a micro controller unit (MCU). The processor 310 may be implemented as a single core processor. The processor 310 may be implemented as a multicore processor. The processor 310 may process data and perform an operation through circuitry. The processor 310 may execute at least one instruction stored in the memory 320 to process data through the circuitry.

The processor 310 may detect powers output from the first inverter 301_1 and the second inverter 301_2 based on an artificial intelligence (AI) model and control the powers output from the first inverter 301_1 and the second inverter 301_2 such that the powers are uniformly distributed. The processor 310 may control the duty of the switching devices provided in the first inverter 301_1 and the second inverter 301_2 by using the powers output from the first inverter 301_1 and the second inverter 301_2 detected based on an AI model to uniformly distribute the powers output from the first inverter 301_1 and the second inverter 301_2.

The AI model may be referred to as a pre-trained AI model (e.g., support vector machine (SVM) algorithm). The pre-trained AI model may include at least one of a support vector machine (SVM) model, a neural networks model, a random forest model, or a graphical model, but is not limited thereto. In the case of an SVM model, the accuracy is relatively high and the response speed is high, and thus an operation of the induction heating device 100 may be quickly switched to optimal specifications, and therefore, the AI model described in an embodiment of the present disclosure may be an SVM model. The SVM model may be generated through supervised learning. The SVM model is trained using labeled training data and then identifies which group newly input data belongs to among groups the model was trained on. According to an embodiment of the present disclosure, the SVM model may be used to determine the material and type of the cooking vessel 104 by using a current value measured by the current detector 410 provided in the induction heating device 100 as training data. According to an embodiment of the present disclosure, the SVM model may learn a situation for uniformly controlling the distribution of the first power P1 and the second power P2 by using the first power P1 output from the first inverter 301_1 provided in the induction heating device 100 and the second power P2 output from the second inverter 301_2 as training data.

Various information required for the operation of the induction heating device 100 (e.g., set ratio value α, or set phase value θₗᵢₘᵢₜ) may be stored in the memory 320. At least one of an instruction, an application (e.g., management application of the induction heating device 100, or SmartThings), data, and/or a program required for the operation of the induction heating device 100 may be stored in the memory 320. The instruction, application, data and/or program stored in the memory 320 may be executed by the processor 310. The processor 310 may execute the instruction, application, data and/or program stored in the memory 320 to generate a control signal for controlling the operation of the induction heating device 100.

An AI model may also be stored in the memory 320. In the memory 320, an AI model that uses user input received through the user interface 540 as training data, an AI model for uniformly distributing power output from the first inverter 301_1 and the second inverter 301_2 based on power output from the first inverter 301_1 and the second inverter 301_2, and an AI model for ensuring a phase margin between a voltage waveform and a current waveform by using the phase angle θ detected by using the voltage waveform and the current waveform output from the first inverter 301_1 as training data, and the like, may be stored.

The memory 320 may include at least one type of storage medium among flash memory type, hard disk type, multimedia card micro type, card type memory (e.g., SD or XD memory, or the like), random access memory (RAM), static random access memory (SRAM), read-only memory (ROM), electrically erasable programmable read-only memory (EEPROM), programmable read-only memory (PROM), magnetic memory, magnetic disk, or optical disk. Programs stored in the memory 320 may be classified into a plurality of modules according to their functions. Information stored in the memory 320 may be read and used by the processor 310.

The communication interface 530 may include one or more components that enable communication between the induction heating device 100 and the cooking vessel 104, between the induction heating device 100 and a server device (not shown), or between the induction heating device 100 and a user terminal (not shown). For example, the communication interface 530 may include the short-range wireless communication interface 531 and the long-range wireless communication interface 532. The short-range wireless communication interface 531 may include a Bluetooth communication unit, a Bluetooth low energy (BLE) communication unit, a near field communication interface, a WLAN (Wi-Fi) communication unit, a Zigbee communication unit, an infrared (infrared data association (IrDA)) communication unit, a Wi-Fi direct (WFD) communication unit, an ultra wideband (UWB) communication unit, and an Ant+ communication unit, but is not limited thereto. The long-range wireless communication interface 532 may be used to communicate with a server device (not shown) when the cooking vessel 104 is controlled remotely by a server device (not shown) in an Internet of Things (IoT) environment. The long-range wireless communication interface 532 may include the Internet, a computer network (e.g., LAN or WAN), and a mobile communication unit. The mobile communication unit transmits and receives a wireless signal with at least one of a base station, an external terminal, or/and a server on a mobile communication network. Here, the wireless signal may include various forms of data resulting from transmission and reception of a voice call signal, a video call signal, or a text/multimedia message. The mobile communication unit may include, but is not limited to, a 3G module, a 4G module, an LTE module, a 5G module, a 6G module, an NB-IoT module, or/and an LTE-M module.

The user interface 540 may include the output interface 541 and the input interface 542. The output interface 541 is for outputting an audio signal or a video signal and may include a display and an audio output unit, and the like. When the display and a touchpad form a layered structure and are configured as a touch screen, the display may also be used as the input interface 542 in addition to the output interface 541. The display may include at least one of a liquid crystal display, a thin film transistor-liquid crystal display, a light-emitting diode (LED), an organic light-emitting diode, a flexible display, a 3D display, or an electrophoretic display. Depending on the implementation form of the induction heating device 100, the induction heating device 100 may include two or more displays.

The audio output unit may output audio data received from the communication interface 530 or stored in the memory 320. The audio output unit may output an audio signal related to a function performed in the induction heating device 100. The audio output unit may include a speaker and a buzzer, and the like.

According to an embodiment of the present disclosure, the output interface 541 may display information about the cooking vessel 104. For example, the output interface 541 may output a graphical user interface (GUI) corresponding to identification information or product type information of the cooking vessel 104. The output interface 541 may output information about the current location of the cooking vessel 104. The output interface 541 may output information about whether the distribution of powers output through the first working coil 210_1 and the second working coil 210_2 is uniform (e.g., information indicating a uniform power distribution, or information indicating a non-uniform power distribution). The output interface 541 may also output guidance information indicating that the induction heating device 100 currently performs an operation of uniformly controlling the distribution of power output from a plurality of inverters (first inverter 301_1 and second inverter 301_2). The output interface 541 may output guidance information that allows a user to determine whether to perform an operation of uniformly controlling power distribution. When guidance information is output through the output interface 541 that allows the user to determine whether to perform an operation of uniformly controlling power distribution, and when a user input requesting that an operation of uniformly controlling power distribution be performed is received through the input interface 542, the processor 310 may perform an operation of uniformly controlling power distribution according to an embodiment of the present disclosure.

The input interface 542 is for receiving an input from the user. The input interface 542 may include at least one of a key pad, a dome switch, a touch pad (contact capacitive method, pressure resistive method, infrared sensing method, surface ultrasonic conduction method, integral tension measurement method, piezo effect method, or the like), a jog wheel, and a jog switch, but is not limited thereto.

The input interface 542 may include a voice recognition module. For example, the induction heating device 100 may receive a voice signal, which is an analog signal, through a microphone and convert a voice portion into a computer-readable text by using an automatic speech recognition (ASR) model. The induction heating device 100 may interpret the converted text by using a natural language understanding (NLU) model to obtain speech intent of the user. Here, the ASR model or the NLU model may be an artificial intelligence (AI) model. The AI model may be processed by an AI-dedicated processor designed with a hardware architecture specialized for processing the AI model. The AI model may be generated through learning. Here, being generated through learning means that a basic AI model is trained by using a plurality of training data by a learning algorithm, thereby generating a predefined operation rule or AI model set to perform a desired characteristic (or purpose). The AI model may include a plurality of neural network layers. Each of the plurality of neural network layers may have a plurality of weight values and may perform a neural network operation through an operation between an operation result of a previous layer and the plurality of weights.

Linguistic understanding is a technology that recognizes, applies, and processes human language and text, and includes natural language processing, machine translation, dialog systems, question answering, and speech recognition/synthesis.

The memory 320 may store a program for processing and controlling the processor 310, and may also store input/output data (e.g., unique identification information of the cooking vessel 104, variable identification information of the cooking vessel 104, a plurality of power transmission patterns, or cooking progress information of the cooking vessel 104, or the like). The induction heating device 100 may operate a web storage or cloud server that performs a storage function on the Internet.

FIG. 5 illustrates an example in which the induction heating device 100 may include the first working coil 210_1, the second working coil 210_2, the first inverter 301_1, and the second inverter 301_2, but may be modified to further include the third working coil 210_3, the fourth working coil 210_4, the third inverter 301_3, and the fourth inverter 301_4 as shown in FIG. 3B. The induction heating device 100 may be modified so as not to include the first working coil 210_1, the second working coil 210_2, the first inverter 301_1, and the second inverter 301_2. The induction heating device 100 may be modified to include the third working coil 210_3, the fourth working coil 210_4, the third inverter 301_3, and the fourth inverter 301_4.

FIG. 6 is a flowchart of a control method of the induction heating device 100, according to an embodiment of the present disclosure. FIG. 6 illustrates a control method of the induction heating device 100 for uniformly distributing power output from a plurality of inverters.

In operation S610, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S610, the induction heating device 100 may identify whether the cooking vessel 104 is placed on a plurality of working coils by using the methods described above with reference to FIG. 1.

The cooking vessel 104 is identified as being placed on the plurality of working coils, and then, in operation S620, the induction heating device 100 may obtain (or detect) powers output from the respective inverters. For example, the plurality of inverters may be the first inverter 301_1 and the second inverter 301_2, but are not limited thereto. The induction heating device 100 may detect the current and voltage output from the first inverter 301_1, respectively, and obtain the first power P1 by multiplying the detected current and voltage. The induction heating device 100 may detect the current and voltage output from the second inverter 301_2, respectively, and obtain the second power P2 by multiplying the detected current and voltage.

In operation S630, the induction heating device 100 may obtain a ratio value R1 between the obtained powers. For example, the induction heating device 100 may obtain the ratio value R1 between the first power P1 and the second power P2. For example, when the first power P1 is 2400 W and the second power P2 is 1600 W, the ratio value (R1=P2/P1) between the first power P1 and the second power P2 calculated based on P1 is 0.67, and a ratio of P1 and P2 may be expressed as P1:P2=2400:1600=1:0.67. In this case, the second power P2 corresponds to about 67 % of the first power P1. For example, when the first power P1 is 1200 W and the second power P2 is 1800 W, the ratio value (R1=P2/P1) between the first power P1 and the second power P2 calculated based on P1 is 1.5, and a ratio of P1 and P2 may be expressed as P1:P2=1200:1800=1:1.5. In this case, the second power P2 corresponds to about 125 % of the first power P1.

In operation S640, the induction heating device 100 compares the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 correspond to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers for which the distribution of powers output from a plurality of inverters may be determined to be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S640, as a comparison result between the obtained ratio value R1 and the set ratio value α, when the obtained ratio value R1 is included in the set ratio value α (when the obtained ratio value R1 does not deviate from the set ratio value α), in operation S650, the distribution of the first power P1 and the second power P2 is uniform, and thus the induction heating device 100 operates to maintain the current state.

In operation S640, as a comparison result between the obtained ratio value R1 and the set ratio value α, when the obtained ratio value R1 is greater than or less than the set ratio value α (when the obtained ratio value R1 deviates from the set ratio value α), in operation S660, the induction heating device 100 may adjust a duty of a switching device provided in at least one of a plurality of inverters (first inverter 301_1 and second inverter 301_2).

In operation S660, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S660, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S660, increasing the duty of the inverter that outputs low power may be performed when the duties of a plurality of inverters are all low, but is not limited thereto.

In operation S660, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

According to an embodiment of the present disclosure, a duty reduction amount or a duty increase amount may be determined based on the ratio value R1. For example, when the ratio value R1 between the first power P1 and the second power P2 output from the first inverter 301_1 and the second inverter 301_2, respectively, is greater than the set ratio value α, the duty reduction amount of the switching device may be large. For example, when the ratio value R1 between the first power P1 and the second power P2 output from the first inverter 301_1 and the second inverter 301_2, respectively, indicates that the first power P1 is more than twice the second power P2, the induction heating device 100 may be set to reduce the duty reduction amount of the switching device by 10 %. For example, when the ratio value R1 between the first power P1 and the second power P2 output from the first inverter 301_1 and the second inverter 301_2, respectively, indicates that the first power P1 is less than twice the second power P2, the induction heating device 100 may be set to reduce the duty reduction amount of the switching device by 5 %, but the duty reduction amount of the switching device is not limited thereto.

After performing operation S660, the induction heating device 100 may proceed to operation S620 and may repeatedly perform the process described above until the ratio value R1 is included in the set ratio value α.

Each operation of the flowchart illustrated in FIG. 6 may be performed by the processor 310 of the induction heating device 100. Although not shown in the flowchart of FIG. 6, the flowchart of FIG. 6 may include an operation of controlling frequencies of the first inverter 301_1 and the second inverter 301_2 between each operation to satisfy the output (Power). Accordingly, the flowchart of the control method of the induction heating device 100 according to an embodiment of the present disclosure is not limited to that shown in FIG. 6. The flowchart of FIG. 6 may include, in operation S610, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

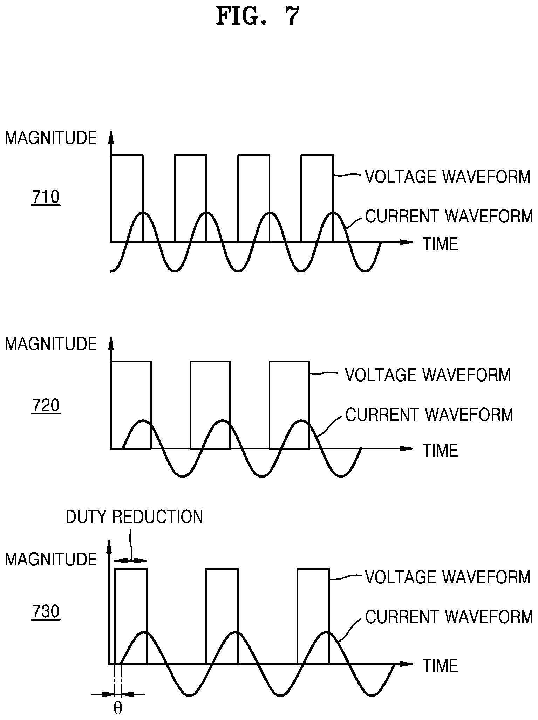

FIG. 7 is a waveform diagram for explaining frequency control and duty control of an inverter, performed in the induction heating device 100, according to an embodiment of the present disclosure.

When the voltage (pole voltage) waveform and current (high-frequency current) waveform output from the first inverter 301_1 provided in the induction heating device 100 are as shown in 710, if the frequency of the first inverter 301_1 is reduced, the number of voltage waveforms and current waveforms output from the first inverter 301_1 is reduced as shown in 720. Accordingly, the power output from the first inverter 301_1 increases. After reducing the frequency of the first inverter 301_1, if the duty is reduced, the voltage waveform and current waveform output from the first inverter 301_1 shown in 720 may have their duties reduced as shown in 730. Accordingly, the power output from the first inverter 301_1 decreases. For convenience of explanation, FIG. 7 is described based on the first inverter 301_1, but FIG. 7 may be applied to all inverters provided in the induction heating device 100.

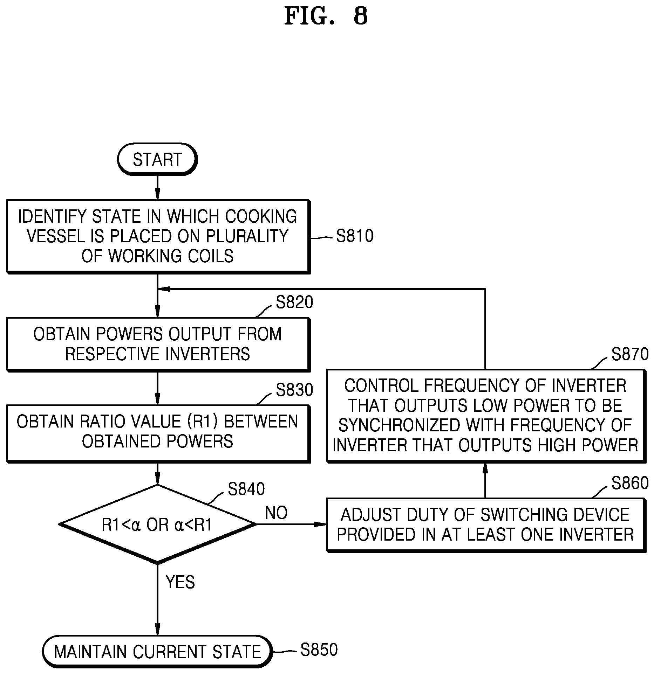

FIG. 8 is a flowchart of a control method of the induction heating device 100, according to an embodiment of the present disclosure. FIG. 8 illustrates an example in which a frequency synchronization operation is added to the flowchart of FIG. 6.

In operation S810, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S810, the induction heating device 100 may identify whether the cooking vessel 104 is placed on a plurality of working coils by using the methods described above with reference to FIG. 1.

The cooking vessel 104 is identified as being placed on the plurality of working coils, and then, in operation S820, the induction heating device 100 may obtain (or detect) powers output from the respective inverters. For example, the plurality of inverters may be the first inverter 301_1 and the second inverter 301_2, but are not limited thereto. The induction heating device 100 may detect the current and voltage output from the first inverter 301_1, respectively, and obtain the first power P1 by multiplying the detected current and voltage. The induction heating device 100 may detect the current and voltage output from the second inverter 301_2, respectively, and obtain the second power P2 by multiplying the detected current and voltage.

In operation S830, the induction heating device 100 may obtain a ratio value R1 between the obtained powers. For example, the induction heating device 100 may obtain the ratio value R1 between the first power P1 and the second power P2. For example, when the first power P1 is 2400 W and the second power P2 is 1600 W, the ratio value (R1=P2/P1) between the first power P1 and the second power P2 calculated based on P1 is 0.67, and a ratio of P1 and P2 may be expressed as P1:P2=2400:1600=1:0.67. In this case, the second power P2 corresponds to about 67 % of the first power P1. For example, when the first power P1 is 1200 W and the second power P2 is 1800 W, the ratio value (R1=P2/P1) between the first power P1 and the second power P2 calculated based on P1 is 1.5, and a ratio of P1 and P2 may be expressed as P1:P2=1200:1800=1:1.5. In this case, the second power P2 corresponds to about 125 % of the first power P1.

In operation S840, the induction heating device 100 compares the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 corresponds to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers for which the distribution of powers output from a plurality of inverters may be determined to be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S840, as a comparison result between the obtained ratio value R1 and the set ratio value α, when the obtained ratio value R1 is included in the set ratio value α (when the obtained ratio value R1 does not deviate from the set ratio value α), in operation S850, the distribution of the first power P1 and the second power P2 is uniform, and thus the induction heating device 100 may operate to maintain the current state.

In operation S840, as a comparison result between the obtained ratio value R1 and the set ratio value α, when the obtained ratio value R1 is greater than or less than the set ratio value α (when the obtained ratio value R1 deviates from the set ratio value α), in operation S860, the induction heating device 100 may adjust a duty of a switching device provided in at least one of a plurality of inverters (first inverter 301_1 and second inverter 301_2).

In operation S860, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S860, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S660, increasing the duty of the inverter that outputs low power may be performed when the duties of a plurality of inverters are all low, but is not limited thereto.

In operation S860, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

After performing operation S860, in operation S870, the induction heating device 100 may control a frequency of an inverter that outputs low power to be synchronized with a frequency of an inverter that outputs high power. For example, frequency synchronization may be performed to match the frequencies of the two inverters by increasing the frequency of the inverter that outputs high power and decreasing the frequency of the inverter that outputs low power. By synchronizing the frequencies of the two inverters as such, the powers output from the two inverters may be maintained stably.

After performing operation S870, the induction heating device 100 may proceed to operation S820 and may repeatedly perform the process described above until the ratio value R1 is included in the set ratio value α.

The order of the flowchart shown in FIG. 8 may be changed. For example, after performing operation S870, operation S860 may be performed. Accordingly, the flowchart of the control method of the induction heating device 100 according to an embodiment of the present disclosure is not limited to that shown in FIG. 8, and each operation of the flowchart shown in FIG. 8 may be performed by the processor 310 of the induction heating device 100. The flowchart of FIG. 8 may include an operation of controlling frequencies of the first inverter 301_1 and the second inverter 301_2 between operations to satisfy the output (Power). The flowchart of FIG. 8 may include, in operation S810, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

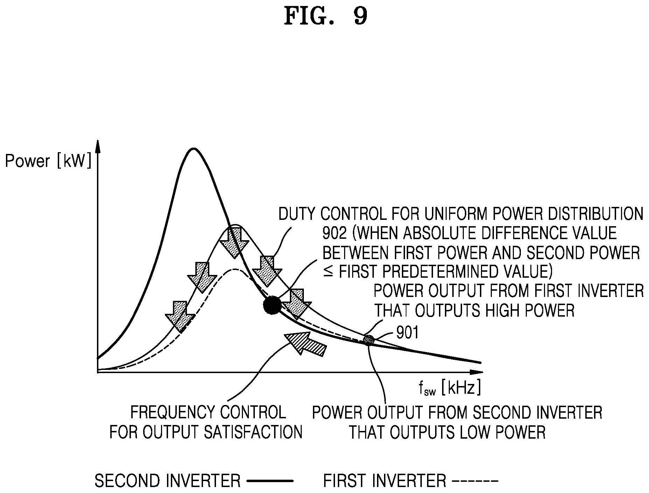

FIG. 9 is a diagram showing a relationship between power and frequency output from two inverters in the induction heating device 100, according to an embodiment of the present disclosure. FIG. 9 illustrates a power waveform when a duty of a switching device of an inverter that outputs high power is reduced.

A point 901 shown in FIG. 9 is a case in which the ratio value R1 between the first power P1 and the second power P2 is greater than or less than the set ratio value α, and thus the duty of the first inverter 301_1 that outputs high power is reduced. Accordingly, at point 902, the ratio value R1 between the first power P1 and the second power P2 is included in the set ratio value α, and thus the distribution of the first power P1 output from the first inverter 301_1 and the second power P2 output from the second inverter 301_2 becomes uniform. In this case, the frequencies of the first inverter 301_1 and the second inverter 301_2 may be controlled to satisfy the output (Power). Output satisfaction may indicate a state in which the sum of the first power P1 output from the first inverter 301_1 and the second power P2 output from the second inverter 301_2 (total power Pₜₒₜₐₗ= P1 + P2) is power corresponding to a command (or command power P_{ref}). For example, when the command is 10 stages, the state in which the sum of the first power P1 and the second power P2 is an output corresponding to 10 stages (e.g., 2 kW, or output corresponding to the command power P_{ref}) may indicate a state that satisfies the output.

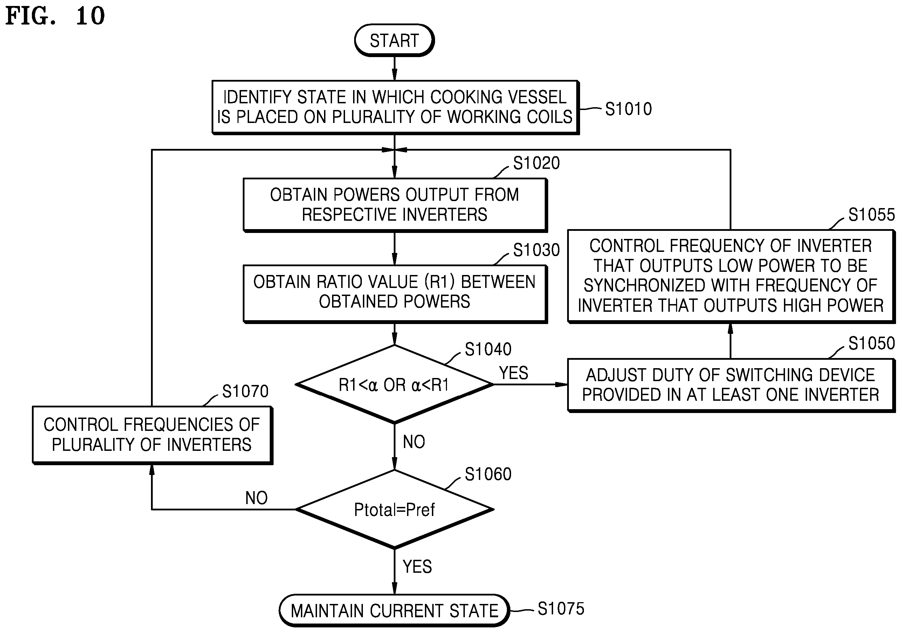

FIG. 10 is a flowchart of a control method of the induction heating device 100, according to an embodiment of the present disclosure. FIG. 10 shows an example of adding a configuration of controlling frequencies of a plurality of inverters to the flowchart of FIG. 8 until the outputs of the plurality of inverters correspond to command power.

In operation S1010, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S1010, the induction heating device 100 may identify whether the cooking vessel 104 is placed on a plurality of working coils by using the methods described above with reference to FIG. 1.

The cooking vessel 104 is identified as being placed on the plurality of working coils, and then, in operation S1020, the induction heating device 100 may obtain (or detect) powers output from the respective inverters. For example, the plurality of inverters may be the first inverter 301_1 and the second inverter 301_2, but are not limited thereto. The induction heating device 100 may detect the current and voltage output from the first inverter 301_1, respectively, and obtain the first power P1 by multiplying the detected current and voltage. The induction heating device 100 may detect the current and voltage output from the second inverter 301_2, respectively, and obtain the second power P2 by multiplying the detected current and voltage.

In operation S1030, the induction heating device 100 may obtain a ratio value R1 between the obtained powers. For example, the induction heating device 100 may obtain the ratio value R1 between the first power P1 and the second power P2. For example, when the first power P1 is 2400 W and the second power P2 is 1600 W, the ratio value (R1=P2/P1) between the first power P1 and the second power P2 calculated based on P1 is 0.67, and a ratio of P1 and P2 may be expressed as P1:P2=2400:1600=1:0.67. In this case, the second power P2 corresponds to about 67 % of the first power P1. For example, when the first power P1 is 1200 W and the second power P2 is 1800 W, the ratio value (R1=P2/P1) between the first power P1 and the second power P2 calculated based on P1 is 1.5, and a ratio of P1 and P2 may be expressed as P1:P2=1200:1800=1:1.5. In this case, the second power P2 corresponds to about 125 % of the first power P1.

In operation S1040, the induction heating device 100 compares the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 corresponds to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers for which the distribution of powers output from a plurality of inverters may be determined to be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S1040, as a comparison result between the obtained ratio value R1 and the set ratio value α, when the obtained ratio value R1 is greater than or less than the set ratio value α (when the obtained ratio value R1 deviates from the set ratio value α), in operation S1050, the induction heating device 100 may adjust a duty of a switching device provided in at least one of a plurality of inverters (first inverter 301_1 and second inverter 301_2).

In operation S1050, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S1050, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S660, increasing the duty of the inverter that outputs low power may be performed when the duties of a plurality of inverters are all low, but is not limited thereto.

In operation S1050, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

After performing operation S1050, in operation S1055, the induction heating device 100 may control a frequency of an inverter that outputs low power to be synchronized with a frequency of an inverter that outputs high power. For example, frequency synchronization may be performed to match the frequencies of the two inverters by increasing the frequency of the inverter that outputs high power and decreasing the frequency of the inverter that outputs low power. By synchronizing the frequencies of the two inverters as such, the powers output from the two inverters may be maintained stably.

After performing operation S1055, the induction heating device 100 may proceed to operation S1020 and may repeatedly perform the process described above until the ratio value R1 is included in the set ratio value α.

In operation S1040, when the detected ratio value R1 is included in the set ratio value α, in operation S1060, the induction heating device 100 may check whether the total sum of powers output from a plurality of inverters (e.g., first inverter 301_1 and second inverter 301_2) (e.g., Pₜₒₜₐₗ=P1+P2) corresponds to the command power P_{ref}. The command power P_{ref} may also be referred to as reference power. The command power is power that is capable of being set by user input and may be power desired by a user. For example, when the user input is 10 levels, the command power may be 2 kW.

In operation S1060, when the total sum of powers output from a plurality of inverters (e.g., first inverter 301_1 and second inverter 301_2) (e.g., Pₜₒₜₐₗ=P1 + P2) corresponds to the command power, in operation S1075, the induction heating device 100 may maintain the current state. This is because the powers output from the plurality of inverters are uniformly distributed, and the powers output from the plurality of inverters satisfy the command power (output satisfaction state).

In operation S1060, when the total sum of powers output from a plurality of inverters (e.g., first inverter 301_1 and second inverter 301_2) (e.g., Pₜₒₜₐₗ=P1 + P2) does not correspond to the command power P_{ref}, the induction heating device 100 may control the frequencies of the plurality of inverters (e.g., first inverter 301_1 and second inverter 301_2) in operation S1070. Frequency control performed in operation S1070 may indicate control performed until the total sum of powers output from a plurality of inverters (e.g., first inverter 301_1 and second inverter 301_2) (e.g., Pₜₒₜₐₗ=P1+P2) corresponds to the command power P_{ref}.

The order of the flowchart shown in FIG. 10 may be changed. For example, after performing operation S1055, operation S1050 may be performed. Accordingly, the flowchart of the control method of the induction heating device 100 according to an embodiment of the present disclosure is not limited to that shown in FIG. 10, and each operation of the flowchart shown in FIG. 10 may be performed by the processor 310 of the induction heating device 100. The flowchart of FIG. 10 may include an operation of controlling frequencies of the first inverter 301_1 and the second inverter 301_2 between operations to satisfy the output (Power). The flowchart of FIG. 10 may include, in operation S1010, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

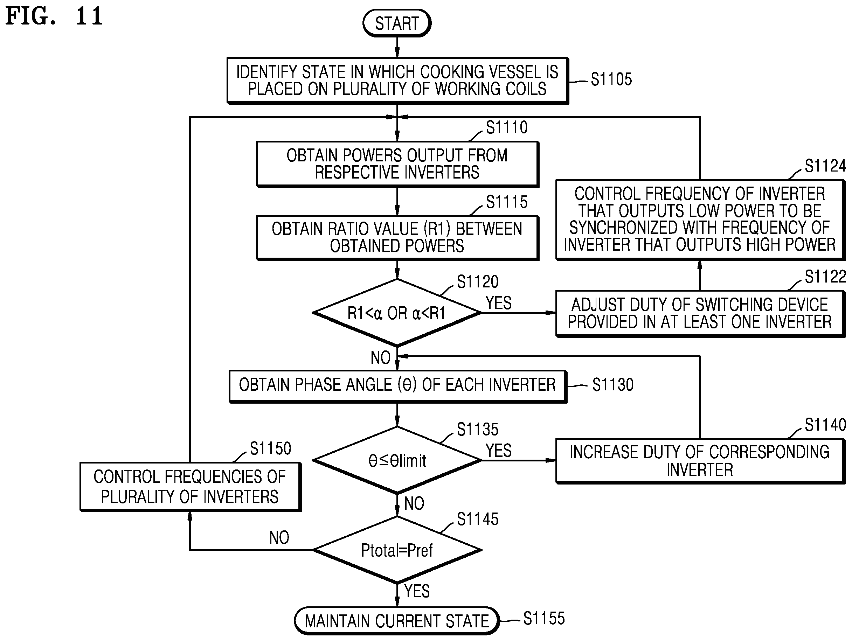

FIG. 11 is a flowchart of a control method of the induction heating device 100, according to an embodiment of the present disclosure. FIG. 11 illustrates an example in which a configuration for ensuring a phase margin is added to the flowchart of FIG. 10.

In operation S1105, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S1105, the induction heating device 100 may identify whether the cooking vessel 104 is placed on a plurality of working coils by using the methods described above with reference to FIG. 1.

The cooking vessel 104 is identified as being placed on the plurality of working coils, and then, in operation S1110, the induction heating device 100 may obtain (or detect) powers output from the respective inverters. For example, the plurality of inverters may be the first inverter 301_1 and the second inverter 301_2, but are not limited thereto. The induction heating device 100 may detect the current and voltage output from the first inverter 301_1, respectively, and obtain the first power P1 by multiplying the detected current and voltage. The induction heating device 100 may detect the current and voltage output from the second inverter 301_2, respectively, and obtain the second power P2 by multiplying the detected current and voltage.

In operation S1115, the induction heating device 100 may obtain a ratio value R1 between the obtained powers. For example, the induction heating device 100 may obtain the ratio value R1 between the first power P1 and the second power P2. For example, when the first power P1 is 2400 W and the second power P2 is 1600 W, the ratio value (R1=P2/P1) between the first power P1 and the second power P2 calculated based on P1 is 0.67, and a ratio of P1 and P2 may be expressed as P1:P2=2400:1600=1:0.67. In this case, the second power P2 corresponds to about 67 % of the first power P1. For example, when the first power P1 is 1200 W and the second power P2 is 1800 W, the ratio value (R1=P2/P1) between the first power P1 and the second power P2 calculated based on P1 is 1.5, and a ratio of P1 and P2 may be expressed as P1:P2=1200:1800=1:1.5. In this case, the second power P2 corresponds to about 125 % of the first power P1.

In operation S1120, the induction heating device 100 compares the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 corresponds to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers from which the distribution of powers output from a plurality of inverters may be determined to be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S1120, as a comparison result between the obtained ratio value R1 and the set ratio value α, when the obtained ratio value R1 is greater than or less than the set ratio value α (when the obtained ratio value R1 deviates from the set ratio value α), in operation S1122, the induction heating device 100 may adjust a duty of a switching device provided in at least one of a plurality of inverters (first inverter 301_1 and second inverter 301_2).

In operation S1122, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S1122, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S660, increasing the duty of the inverter that outputs low power may be performed when the duties of a plurality of inverters are all low, but is not limited thereto.

In operation S1122, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

After performing operation S1122, in operation S1124, the induction heating device 100 may control a frequency of an inverter that outputs low power to be synchronized with a frequency of an inverter that outputs high power. For example, frequency synchronization may be performed to match the frequencies of the two inverters by increasing the frequency of the inverter that outputs high power and decreasing the frequency of the inverter that outputs low power. By synchronizing the frequencies of the two inverters as such, the powers output from the two inverters may be maintained stably.

After performing operation S1124, the induction heating device 100 may proceed to operation S1110 and may repeatedly perform the process described above until the ratio value R1 is included in the set ratio value α.

In operation S1120, when the detected ratio value R1 is included in the set ratio value α, then in operation S1130, the induction heating device 100 detects a phase angle of each inverter. When a phase angle of at least one of the detected phase angles (e.g., the first inverter 301_1 or the second inverter 301_2) is less than or equal to the set phase value θₗᵢₘᵢₜ, in operation S1140, the induction heating device 100 may increase a duty of the corresponding inverter. The set phase value θₗᵢₘᵢₜ may be a value determined based on a state in which a switching device provided in an inverter is prevented from being burned out according to a zero current switching (ZCS) operation. For example, when the duty of the inverter is 10 % or less, the phase angle may be the set phase value θ_{limit.} The phase angle may be defined as a distance between a point at which a voltage waveform passes '0' and a point at which a current waveform passes '0' like θ shown in 730 of FIG. 7. The zero current switching (ZCS) operation refers to an operation in which current becomes '0' when the switching device provided in the inverter is switched. When the current of the switching device does not become '0' when performing the zero current switching (ZCS) operation, the switching device may be burned out.

In operation S1140, the induction heating device 100 increases the duty of the corresponding inverter (e.g., first inverter 301_1 or second inverter 301_2), and then the operation of the induction heating device 100 proceeds to operation S1130. The induction heating device 100 may repeatedly perform operations S1130, S1135, and S1140 until the phase angle detected from all inverters provided in the induction heating device 100 is greater than the set phase value θₗᵢₘᵢₜ.

In operation S1135, when phase angles of all of the plurality of inverters (e.g., first inverter 301_1 and second inverter 301_2) of the induction heating device 100 are greater than the set phase value θₗᵢₘᵢₜ, in operation S1145, if the total sum of the powers output from the plurality of inverters (e.g., first inverter 301_1 and second inverter 301_2) (e.g., Pₜₒₜₐₗ=P1+P2) corresponds to the command power P_{ref}, in operation S1155, the induction heating device 100 may maintain the current state. This is because the powers output from the plurality of inverters are uniformly distributed, and the powers output from the plurality of inverters satisfy the command power (output satisfaction state), and the phase margin of the plurality of inverters is ensured.

In operation S1145, when the total sum of powers output from a plurality of inverters (e.g., first inverter 301_1 and second inverter 301_2) (Pₜₒₜₐₗ=P1 + P2) does not correspond to the command power P_{ref}, the induction heating device 100 may control the frequencies of the plurality of inverters (e.g., first inverter 301_1 and second inverter 301_2) in operation S1150. Frequency control performed in operation S1150 may refer to control performed until the total sum of powers output from a plurality of inverters (e.g., first inverter 301_1 and second inverter 301_2) (e.g., Pₜₒₜₐₗ=P1+P2) corresponds to the command power P_{ref}.

The order of the flowchart shown in FIG. 11 may be changed. For example, after performing operation S1125, operation S1120 may be performed. Accordingly, the flowchart of the control method of the induction heating device 100 according to an embodiment of the present disclosure is not limited to that shown in FIG. 11, and each operation of the flowchart shown in FIG. 11 may be performed by the processor 310 of the induction heating device 100. The flowchart of FIG. 11 may include an operation of controlling frequencies of the first inverter 301_1 and the second inverter 301_2 between operations to satisfy the output (Power). The flowchart of FIG. 11 may include, in operation S1105, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

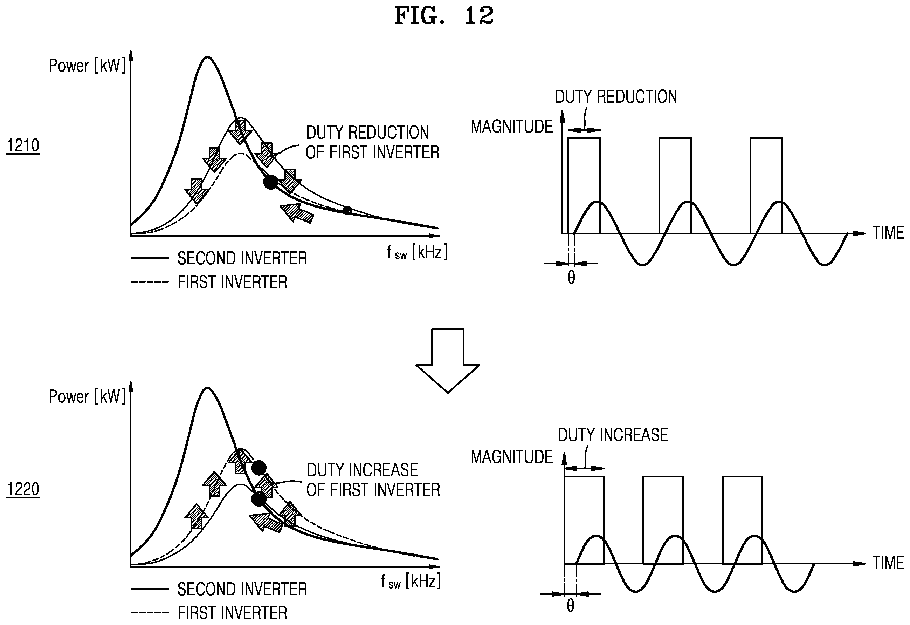

FIG. 12 is a diagram illustrating an example of increasing a duty based on phase angles detected from the plurality of inverters described with reference to FIG. 11.

1210 illustrated in FIG. 12 is an example in which a duty of an inverter (e.g., first inverter 301_1) is reduced as described with reference to FIG. 9. As shown in 1210 in FIG. 12, the processor 310 may reduce the duty of the inverter (e.g., first inverter 301_1) to reduce the power output from the inverter (e.g., first power P1), and when the phase angle θ detected from at least one of the plurality of inverters (e.g., first inverter 301_1 and second inverter 301_2) is less than or equal to the set phase value θₗᵢₘᵢₜ, the induction heating device 100 may increase the duty of the inverter (e.g., first inverter 301_1) as shown in 1220 in FIG. 12 to ensure a phase margin of the inverter (e.g., first inverter 301_1).

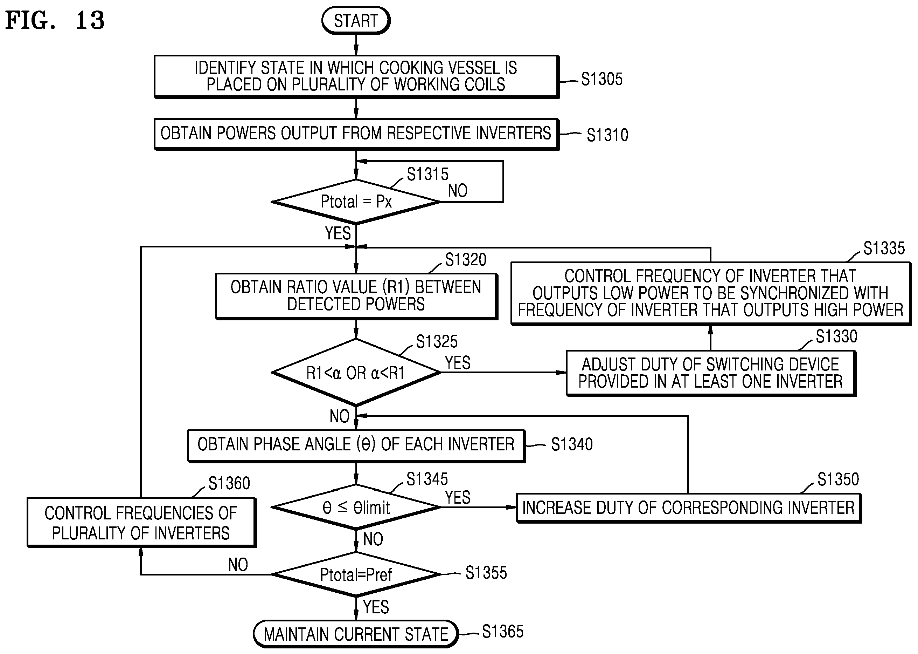

FIG. 13 is a flowchart of a control method of the induction heating device 100, according to an embodiment of the present disclosure. FIG. 13 illustrates an example of adding, to the flowchart of FIG. 11, a configuration of determining whether to start an operation of adjusting a duty of a plurality of inverters, according to an embodiment of the present disclosure.

In operation S1305, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S1305, the induction heating device 100 may identify whether the cooking vessel 104 is placed on a plurality of working coils by using the methods described above with reference to FIG. 1.

In operation S1305, after the induction heating device 100 identifies that the cooking vessel 104 is placed on the plurality of working coils 210_1 and 210_2, in operation S1310, the induction heating device 100 may obtain powers output from a plurality of inverters. The induction heating device 100 may also perform operation S1310, like operation 1110 described above.

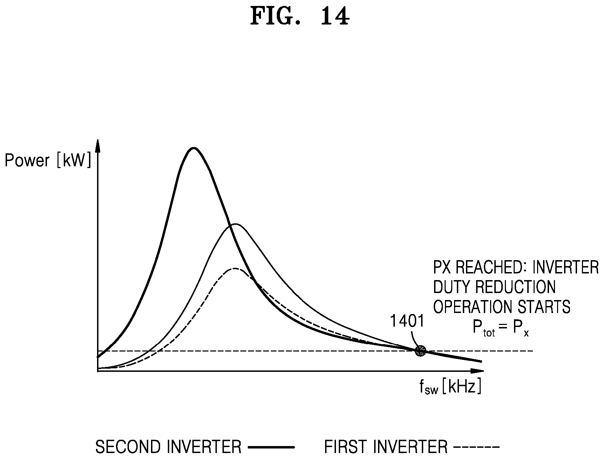

In operation S1315, the induction heating device 100 may determine to start an operation of adjusting the duty of the plurality of inverters (e.g., first inverter 301_1 and second inverter 301_2) when the total power output from the detected plurality of inverters (e.g., first inverter 301_1 and second inverter 301_2) (e.g., Pₜₒₜₐₗ=P1+P2) is greater than or equal to a preset reference power Pₓ. The reference power Pₓ will be explained in detail with reference to FIG. 14 to be described below.

In operation S1320, the induction heating device 100 may obtain a ratio value R1 between the obtained powers. For example, the induction heating device 100 may obtain the ratio value R1 between the first power P1 and the second power P2. For example, when the first power P1 is 2400 W and the second power P2 is 1600 W, the ratio value (R1=P2/P1) between the first power P1 and the second power P2 calculated based on P1 is 0.67, and a ratio of P1 and P2 may be expressed as P1:P2=2400:1600=1:0.67. In this case, the second power P2 corresponds to about 67 % of the first power P1. For example, when the first power P1 is 1200 W and the second power P2 is 1800 W, the ratio value (R1=P2/P1) between the first power P1 and the second power P2 calculated based on P1 is 1.5, and a ratio of P1 and P2 may be expressed as P1:P2=1200:1800=1:1.5. In this case, the second power P2 corresponds to about 125 % of the first power P1.

In operation S1325, the induction heating device 100 may compare the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 corresponds to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers for which the distribution of powers output from a plurality of inverters may be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S1325, as a comparison result between the obtained ratio value R1 and the set ratio value α, when the obtained ratio value R1 is greater than or less than the set ratio value α (when the obtained ratio value R1 deviates from the set ratio value α), in operation S1330, the induction heating device 100 may adjust a duty of a switching device provided in at least one of a plurality of inverters (first inverter 301_1 and second inverter 301_2).

In operation S1330, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S1330, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S660, increasing the duty of the inverter that outputs low power may be performed when the duties of a plurality of inverters are all low, but is not limited thereto.

In operation S1330, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

After performing operation S1330, in operation S1335, the induction heating device 100 may control a frequency of an inverter that outputs low power to be synchronized with a frequency of an inverter that outputs high power. For example, frequency synchronization may be performed to match the frequencies of the two inverters by increasing the frequency of the inverter that outputs high power and decreasing the frequency of the inverter that outputs low power. By synchronizing the frequencies of the two inverters as such, the powers output from the two inverters may be maintained stably.

After performing operation S1335, the induction heating device 100 may proceed to operation S1320 and may repeatedly perform the process described above until the ratio value R1 is included in the set ratio value α.

In operation S1325, when the detected ratio value R1 is included in the set ratio value α, then in operation S1340, the induction heating device 100 may obtain a phase angle of each inverter. When a phase angle of at least one of the obtained phase angles (e.g., the first inverter 301_1 or the second inverter 301_2) is less than or equal to the set phase value θₗᵢₘᵢₜ, in operation S1350, the induction heating device 100 may increase a duty of the corresponding inverter. The set phase value θₗᵢₘᵢₜ may be a value determined based on a state in which a switching device is prevented from being burned out according to a zero current switching (ZCS) operation. For example, when the duty of the inverter is 10 % or less, the phase angle may be the set phase value θ_{limit***.***} The phase angle may be defined as a distance between a point at which a voltage waveform passes '0' and a point at which a current waveform passes '0' like θ shown in 730 of FIG. 7. The ZCS operation may refer to an operation in which the current becomes '0' when the switching device provided in the inverter is switched. When the current of the switching device does not become '0' during the ZCS operation, the switching device may be burned out.

In operation S1350, the induction heating device 100 increases the duty of the corresponding inverter (e.g., first inverter 301_1 or second inverter 301_2), and then the operation of the induction heating device 100 proceeds to operation S1340. The induction heating device 100 may repeatedly perform operations S1340, S1345, and S1340 until the phase angle detected from all inverters provided in the induction heating device 100 is greater than the set phase value θₗᵢₘᵢₜ.

In operation S1345, when phase angles of all of the plurality of inverters (e.g., first inverter 301_1 and second inverter 301_2) of the induction heating device 100 are greater than the set phase value θₗᵢₘᵢₜ, in operation S1355, if the total sum of the powers output from the plurality of inverters (e.g., first inverter 301_1 and second inverter 301_2) (e.g., Pₜₒₜₐₗ=P1+P2) corresponds to the command power P_{ref}, in operation S1365, the induction heating device 100 may maintain the current state. This is because the powers output from the plurality of inverters are uniformly distributed, and the powers output from the plurality of inverters satisfy the command power (output satisfaction state), and the phase margin of the plurality of inverters is ensured.

In operation S1355, when the total sum of powers output from a plurality of inverters (e.g., first inverter 301_1 and second inverter 301_2) (Pₜₒₜₐₗ=P1 + P2) does not correspond to the command power P_{ref}, the induction heating device 100 may control the frequencies of the plurality of inverters (e.g., first inverter 301_1 and second inverter 301_2) in operation S1360. Frequency control performed in operation S1150 may refer to control performed until the total sum of powers output from a plurality of inverters (e.g., first inverter 301_1 and second inverter 301_2) (e.g., Pₜₒₜₐₗ=P1+P2) corresponds to the command power P_{ref}.

The order of the flowchart shown in FIG. 13 may be changed. For example, after performing operation S1335, operation S1330 may be performed. Accordingly, the flowchart of the control method of the induction heating device 100 according to an embodiment of the present disclosure is not limited to that shown in FIG. 13, and each operation of the flowchart shown in FIG. 13 may be performed by the processor 310 of the induction heating device 100. The flowchart of FIG. 13 may include an operation of controlling frequencies of the first inverter 301_1 and the second inverter 301_2 between operations to satisfy the output (Power). The flowchart of FIG. 13 may include, in operation S1305, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

FIG. 14 is a diagram illustrating a point in time when the induction heating device 100 begins to perform an operation of reducing a duty of an inverter, according to an embodiment of the present disclosure.

The induction heating device 100 of FIG. 14 may start performing an operation of reducing the duty of the inverter at a point in time 1401. The point in time 1401 is when the sum of powers output from a plurality of inverters (e.g., first inverter 301_1 and second inverter 301_2) (e.g., first power P1 and second power P2) (e.g., Pₜₒₜₐₗ=P1+P2) corresponds to (or reaches) the reference power Pₓ. The reference power Pₓ is power corresponding to low power of the induction heating device 100, and refers to power output from a plurality of inverters (e.g., first inverter 301_1 and second inverter 301_2) that is uniformly distributed but has not reached the command power P_{ref}. For example, the reference power Pₓ may be 1 kW or less.

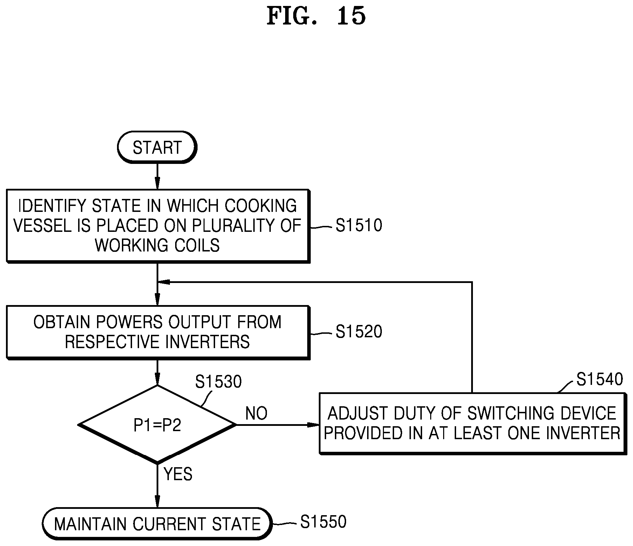

FIG. 15 is a flowchart of a control method of the induction heating device 100, according to an embodiment of the present disclosure. FIG. 15 shows a case in which power distribution is determined to be uniform when powers output from a plurality of inverters are the same.

In operation S1510, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S1510, the induction heating device 100 may identify whether the cooking vessel 104 is placed on a plurality of working coils by using the methods described above with reference to FIG. 1.

In operation S1510, after the induction heating device 100 identifies a state in which the cooking vessel 104 is placed on the plurality of working coils 210_1 and 210_2, in operation S1520, the induction heating device 100 may obtain powers output from the plurality of inverters (e.g., first inverter 301_1 and second inverter 301_2) respectively (e.g., the first power P1 and the second power P2). The induction heating device 100 may also obtain the powers output from the plurality of inverters as in operation S620 of FIG. 6.

In operation S1530, when the obtained powers (e.g., the first power P1 and the second power P2) are the same, the induction heating device 100 may maintain the current state in operation S1550. This is because the powers output from the plurality of inverters (e.g., first inverter 301_1 and second inverter 301_2) provided in the induction heating device 100 are distributed uniformly.

In operation S1530, when the induction heating device 100 has different (or not the same) power obtained (e.g., first power P1 and second power P2), then in operation S1540, the induction heating device 100 may adjust a duty of a switching device provided in at least one of the plurality of inverters 301_1 and 301_2, as in operation S660 of FIG. 6 described above. The induction heating device 100 may repeatedly perform operations S1520, S1530, and S1540 described above until the powers output from the plurality of inverters (e.g., first inverter 301_1 and second inverter 301_2) have the same value. An operation performed until the powers output from the plurality of inverters (e.g., first inverter 301_1 and second inverter 301_2) have the same value may represent an operation that makes the first power P1 and the second power P2 equal.

Each operation of the flowchart illustrated in FIG. 15 may be performed by the processor 310 of the induction heating device 100. The flowchart of FIG. 15 may include an operation of controlling frequencies of the first inverter 301_1 and the second inverter 301_2 between operations to satisfy the output (Power). The flowchart of FIG. 15 may include, in operation S1510, an operation of controlling frequencies and duties of a plurality of inverters (e.g., first inverter 301_1 and second inverter 301_2) for an output (Power) that satisfies the command power P_{ref} after identifying a state in which the cooking vessel 104 is placed on a plurality of working coils.

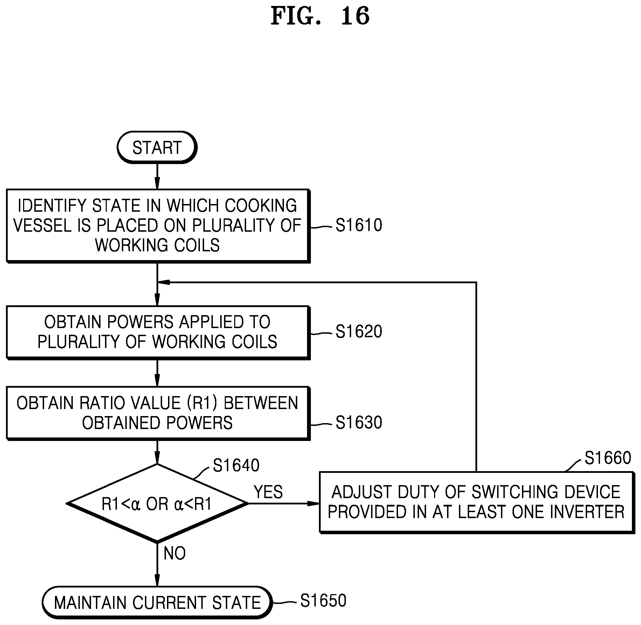

FIG. 16 is a flowchart of a control method of the induction heating device 100, according to an embodiment of the present disclosure. FIG. 16 illustrates an example performed based on powers applied to a plurality of working coils.

In operation S1610, the induction heating device 100 may identify a state in which the cooking vessel 104 is placed on the plurality of working coils 210_1 and 210_2. For example, the induction heating device 100 may identify a state in which the cooking vessel 104 is placed on the plurality of working coils 210_1 and 210_2 by using the first current detector 410_1 and the second current detector 410_2. To this end, the induction heating device 100 may read a predetermined value stored in the memory 320. The predetermined value may be a current value corresponding to about 10 to 20 % of a working coil capacity, but the predetermined value is not limited thereto. For example, the predetermined value may be determined based on an output value of the working coil. The induction heating device 100 may compare a current value obtained from the first current detector 410_1 and the second current detector 410_2 with a predetermined value, and when the current value obtained from the first current detector 410_1 and the second current detector 410_2 is greater than or equal to the predetermined value, the induction heating device 100 may identify a state (or a situation) in which the cooking vessel 104 is placed on the plurality of working coils 210_1 and 210_2. In operation S1610, the induction heating device 100 may identify whether the cooking vessel 104 is placed on a plurality of working coils by using the methods described above with reference to FIG. 1.

In operation S1620, the induction heating device 100 may obtain powers applied to the plurality of working coils (e.g., first working coil 210_1 and second working coil 210_2), respectively. In operation S1630, the induction heating device 100 may obtain a ratio value R1 between the obtained powers.

In operation S1640, the induction heating device 100 may compare the obtained ratio value R1 with the set ratio value α. The set ratio value α is a value determined based on a state in which the distribution of powers output from a plurality of inverters is uniform. As described with reference to FIGS. 1 and 2, the set ratio value α may be determined based on a ratio value between the powers output from a plurality of inverters (first inverter 301_1 and second inverter 301_2) when the temperature of the bottom surface of the cooking vessel 104 is uniform. For example, the set ratio value α may be at least one of 1, 0.83, and 1.2, but is not limited thereto. When the set ratio value α is 1, the ratio of P1 and P2 corresponds to P1:P2=1:1 based on P1. When the set ratio value α is 0.83, the ratio of P1 and P2 corresponds to P1:P2=1:0.83 based on P1. In this case, based on P1, P2 corresponds to 83 % of P1. When the set ratio value α is 1.2, the ratio of P1 and P2 corresponds to P1:P2=1:1.2 based on P1. In this case, based on P1, P2 corresponds to 120 % of P1. The set ratio value α may be a ratio value between powers for which the distribution of powers output from a plurality of inverters may be determined to be uniform, and may represent a value representing P2 based on P1. The set ratio value α may be determined in various ways depending on the conditions of the cooking vessel 104 and the plurality of working coils 201_1 and 201_2, and thus is not limited to the values described above.

In operation S1640, as a comparison result between the obtained ratio value R1 and the set ratio value α, when the obtained ratio value R1 is included in the set ratio value α (when the obtained ratio value R1 does not deviate from the set ratio value α), in operation S1650, the distribution of the first power P1 and the second power P2 is uniform, and thus the induction heating device 100 may operate to maintain the current state.

In operation S1640, as a comparison result between the obtained ratio value R1 and the set ratio value α, when the obtained ratio value R1 is greater than or less than the set ratio value α (when the obtained ratio value R1 deviates from the set ratio value α), in operation S1660, the induction heating device 100 may adjust a duty of a switching device provided in at least one of a plurality of inverters (first inverter 301_1 and second inverter 301_2).

In operation S1660, for example, the induction heating device 100 may reduce the duty of the inverter that outputs high power. Accordingly, the power output from an inverter that outputs high power may be reduced. The duty of the inverter may be used to adjust the magnitude of the voltage output from the inverter. As the duty of the inverter increases, the voltage output from the inverter increases, and as the duty of the inverter decreases, the voltage output from the inverter decreases. Therefore, when the duty of the inverter is reduced, the voltage output from the inverter decreases, and accordingly, the power output from the inverter also decreases. For example, when the input voltage applied to the inverter is 12 V and the duty is 50 %, the power output from the inverter (P=V(12V)*D(50 %)) is 6 W. In this case, when the duty is reduced to 40 %, the power output from the inverter (P=V(12V)*D(40 %)) is reduced to 4.8 W. A decrease in power P output from the inverter may indicate a decrease in the output voltage of the inverter.

In operation S1660, for example, the induction heating device 100 may increase the duty of the inverter that outputs low power. Accordingly, the power output from an inverter that outputs low power may be increased. When the duty of the inverter is increased, the voltage output from the inverter increases, and accordingly, the power output from the inverter also increases. For example, when the input voltage applied to the inverter is 12 V and the duty is 20 %, the power output from the inverter (P=V(12V)*D(20%)) is 2.4 W. In this case, when the duty is increased to 40 %, the power output from the inverter (P=V(12V)*D(40 %)) is increased to 4.8 W. An increase in the power P output from the inverter may indicate an increase in the output voltage of the inverter. In operation S1660, increasing the duty of the inverter that outputs low power may be performed when the duties of a plurality of inverters are all low, but is not limited thereto.

In operation S1660, for example, the induction heating device 100 may increase the duty of the inverter that outputs low power while decreasing the duty of the inverter that outputs high power. Accordingly, the power output from the inverter that outputs low power increases and the power output from the inverter that outputs high power decreases, and thus the distribution of powers output from a plurality of inverters may be controlled uniformly.

After performing operation S1660, the induction heating device 100 may proceed to operation S1620 and may repeatedly perform the process described above until the ratio value R1 is included in the set ratio value α.

Each operation of the flowchart illustrated in FIG. 16 may be performed by the processor 310 of the induction heating device 100. Although not shown in the flowchart of FIG. 16, the flowchart of FIG. 6 may include an operation of controlling frequencies of the first inverter 301_1 and the second inverter 301_2 between each operation to satisfy the output (Power). Accordingly, the flowchart of the control method of the induction heating device 100 according to an embodiment of the present disclosure is not limited to that shown in FIG. 16. The flowchart of FIG. 16 may include, in operation S1610, an operation of controlling frequencies and duties of a plurality of inverters (e.g., the first inverter 301_1 and the second inverter 301_2) for an output (Power) that satisfies the command power P_{ref} after identifying a state in which the cooking vessel 104 is placed on a plurality of working coils.

According to an embodiment of the present disclosure, by uniformly controlling the distribution of power output from the inverter corresponding to each of the plurality of working coils on which the cooking vessel 104 is placed, heat distribution between the corresponding working coils may be made uniform. Accordingly, the thermal efficiency of the cooking vessel 104 is improved to shorten a cooking time, thereby obtaining a uniform cooking result. It may be possible to prevent a large current from flowing in a resonant network of some of the working coils (e.g., inner working coil) among the plurality of working coils on which the cooking vessel 104 is placed. Accordingly, it may be possible to prevent the working coil from being damaged or prevent a switching device built into an inverter corresponding to the working coil from being burned out.

The embodiment illustrated in FIG. 6 described above may be modified or configured to perform operation S620 without performing operation S610. The embodiment illustrated in FIG. 8 may be modified or configured to perform operation S820 without performing operation S810. The embodiment illustrated in FIG. 10 may be modified or configured to perform operation S1020 without performing operation S1010. The embodiment illustrated in FIG. 11 may be modified or configured to perform operation S1110 without performing operation S1105. The embodiment illustrated in FIG. 13 may be modified or configured to perform operation S1310 without performing operation S1305. The embodiment illustrated in FIG. 15 may be modified or configured to perform operation S1520 without performing operation S1510. The embodiment illustrated in FIG. 16 may be modified or configured to perform operation S1620 without performing operation S1610. Accordingly, the induction heating device 100 according to the embodiment illustrated in FIGS. 6, 8, 10, 11, 13, 15, and 16 may obtain (or detect) powers output from a plurality of inverters, respectively, without identifying whether the cooking vessel 104 is placed on a plurality of working coils. The induction heating device 100 according to the embodiment illustrated in FIGS. 6, 8, 10, 11, 13, 15, and 16 may control the duty of the switching device provided in an inverter such that distribution of powers output from inverters corresponding to the respective working coils is uniform without identifying whether the cooking vessel 104 is placed on a plurality of working coils. The induction heating device 100 according to the embodiment illustrated in FIGS. 6, 8, 10, 11, 13, 15, and 16 may control the duty of the switching device provided in the inverter such that distribution of powers output from inverters corresponding to the respective working coils is uniform, regardless of whether the cooking vessel 104 is placed on the plurality of working coils (or regardless of an operation of identifying whether the cooking vessel 104 is placed on the plurality of working coils).

The at least one processor 310 according to an embodiment of the present disclosure may reduce the duty of the switching device provided in the inverter that outputs high power among the first inverter 301_1 and the second inverter 302_2 to include the ratio value R1 in the set ratio value α.

The at least one processor 310 according to an embodiment of the present disclosure may synchronize a frequency of the inverter that outputs high power and a frequency of the inverter that outputs low power when reducing the duty of the switching device included in the inverter that outputs high power.

The at least one processor 310 according to an embodiment of the present disclosure may increase the duty of the switching device provided in the inverter that outputs low power among the first inverter 301_1 and the second inverter 302_2 to include the ratio value R1 in the set phase value α.

The at least one processor 310 according to an embodiment of the present disclosure may reduce the duty of the switching device provided in the inverter that outputs high power among the first inverter 301_1 and the second inverter 302_2, and increase the duty of the switching device provided in the inverter that outputs low power among the first inverter 301_1 and the second inverter 302_2 to include the ratio value R1 in the set phase value α.

The set ratio value α according to an embodiment of the present disclosure may be determined based on a ratio value between the first power P1 and the second power P2 obtained when a difference between a temperature value at a first location L1 and a temperature value at a second location L2 on a bottom surface of the cooking vessel 104 is less than or equal to the set temperature value while the cooking vessel 104 is placed on the first working coil 210_1 and the second working coil 210_2.

The at least one processor 310 according to an embodiment of the present disclosure may stop an operation of adjusting the duty of the switching device when the ratio value R1 is included in the set ratio value α after the duty of the switching device is adjusted.

The at least one processor 310 according to an embodiment of the present disclosure may obtain a first phase angle by using a waveform of the current supplied from the first inverter 301_1 to the first working coil 210_1 and a waveform of the voltage supplied from the first inverter 301_1 to the first working coil 210_1. The at least one processor 310 may obtain a second phase angle by using a waveform of the current supplied from the second inverter 301_2 to the second working coil 210_2 and a waveform of the voltage supplied from the second inverter 301_2 to the second working coil 210_2. When at least one of the first phase angle and the second phase angle is less than or equal to the set phase value θₗᵢₘᵢₜ, the at least one processor 310 may increase the duty of the switching device provided in the inverter in which a phase angle less than or equal to the set phase value θₗᵢₘᵢₜ is obtained.

The at least one processor 310 according to an embodiment of the present disclosure may obtain a phase angle by using a waveform of an output voltage and a waveform of an output current of an inverter that outputs high power, and when the obtained phase angle is less than or equal to the set phase value θₗᵢₘᵢₜ, the at least one processor 310 may increase the duty of the switching device provided in the inverter that outputs high power.

The at least one processor 310 according to an embodiment of the present disclosure may perform an operation of adjusting a duty of a switching device by using the ratio value R1 and the set ratio value α when a sum Pₜₒₜₐₗ between the first power P1 and the second power P2 is greater than or equal to a set power P_{x.}

The adjusting of the duty of the switching device according to an embodiment of the present disclosure may include reducing the duty of the switching device provided in the inverter that outputs high power among the first inverter 301_1 and the second inverter 301_2 to include the ratio value R1 in the set ratio value α.

The reducing of the duty of the switching device provided in the inverter that outputs high power according to an embodiment of the present disclosure may include synchronizing a frequency of the inverter that outputs high power with a frequency of the inverter that outputs low power when reducing the duty of the switching device provided in the inverter that outputs high power.

The adjusting of the duty of the switching device according to an embodiment of the present disclosure may include increasing the duty of the switching device provided in the inverter that outputs low power among the first inverter 301_1 and the second inverter 302_2 to include the ratio value R1 in the set phase value α.

The adjusting of the duty of the switching device according to an embodiment of the present disclosure may include reducing the duty of the switching device provided in the inverter that outputs high power among the first inverter 301_1 and the second inverter 302_2, and increasing the duty of the switching device provided in the inverter that outputs low power among the first inverter 301_1 and the second inverter 302_2 to include the ratio value R1 in the set phase value α.

The method according to an embodiment of the present disclosure may include stopping an operation of adjusting the duty of the switching device when the ratio value R1 is included in the set ratio value α after the duty of the switching device is adjusted.

The method according to an embodiment of the present disclosure may include obtaining the first phase angle by using the waveform of the current supplied from the first inverter 301_1 to the first working coil 210_1 and the waveform of the voltage supplied from the first inverter 301_1 to the first working coil 210_1, obtaining the second phase angle by using the waveform of the current supplied from the second inverter 301_2 to the second working coil 210_2 and the waveform of the voltage supplied from the second inverter 301_2 to the second working coil 210_2, and when at least one of the first phase angle and the second phase angle is less than or equal to the set phase value θₗᵢₘᵢₜ, increasing the duty of the switching device provided in the inverter in which a phase angle less than or equal to the set phase value θₗᵢₘᵢₜ is detected.

The method according to an embodiment of the present disclosure may include obtaining a phase angle by using a waveform of an output voltage and a waveform of an output current of an inverter that outputs high power, and when the obtained phase angle is less than or equal to the set phase value θₗᵢₘᵢₜ, increasing the duty of the switching device provided in the inverter that outputs high power.

The method according to an embodiment of the present disclosure may include performing the operation of adjusting a duty of a switching device by using the ratio value R1 and the set ratio value α when a sum Pₜₒₜₐₗ between the first power P1 and the second power P2 is greater than or equal to a set power P_{x.}

The induction heating device 100 including a plurality of working coils according to an embodiment of the present disclosure may include the first inverter 301_1 that supplies current to the first working coil 210_1 among the plurality of working coils, the second inverter 302_2 that supplies current to the second working coil 210_2 among the plurality of working coils, the memory 320 that stores at least one instruction, and the at least one processor 310 that executes at least one instruction to control the operation of the first inverter 301_1 and the second inverter 301_2. The at least one processor 310 may identify a state in which the cooking vessel 104 is placed on the first working coil 210_1 and the second working coil 210_2, after identifying the state in which the cooking vessel 104 is placed on the first working coil 201_1 and the second working coil 210_2, obtain the first power P1 output from the first inverter 301_1 and the second power P2 output from the second inverter 301_2, and when the first power P1 and the second power P2 are different, perform an operation to make the first power P1 and the second power P2 equal by adjusting the duty of the switching device provided in at least one of the first inverter 301_1 and the second inverter 301_2.

A control method of the induction heating device 100 including the plurality of working coils according to an embodiment of the present disclosure may include identifying the state in which the cooking vessel 104 is placed on the plurality of working coils, after identifying the state in which the cooking vessel 104 is placed on the plurality of working coils, obtaining the first power P1 output from the first inverter 301_1 that supplies current to the first working coil 210_1 among the plurality of working coils, obtaining the second power P2 output from the second inverter 301_2 that supplies current to the second working coil 210_2 among the plurality of working coils, and when the first power P1 and the second power P2 are different, performing an operation to make the first power P1 and the second power P2 equal by adjusting the duty of the switching device provided in at least one of the first inverter 301_1 and the second inverter 301_2.

A device-readable storage medium may be provided in the form of a non-transitory storage medium. Here, the term 'non-transitory storage medium' simply means a tangible device that does not contain a signal (e.g. electromagnetic wave), and the term does not distinguish between cases in which data is stored semi-permanently or temporarily in a storage medium. For example, the 'non-transitory storage medium' may include a buffer in which data is temporarily stored.

According to an embodiment, methods according to various embodiments disclosed in the present disclosure may be provided in a computer program product. The computer program product may be traded between a seller and a buyer as commodities. The computer program product may be distributed in the form of a machine-readable storage medium (e.g., compact disc read only memory (CD-ROM)), or may be distributed online (e.g., by download or upload) via an application store or directly between two user devices (e.g., smartphones). In the case of online distribution, at least some of computer program products (e.g., a downloadable application) may be temporarily stored or temporarily generated in a device-readable storage medium, such as memory of a server of a manufacturer, a server of an application store, or an intermediary server.

## Claims

1. An induction heating device (100) including a plurality of working coils, the induction heating device (100) comprising:
a first inverter (301_1) configured to supply current to a first working coil (210_1) among the plurality of working coils;
a second inverter (302_2) configured to supply current to a second working coil (210_2) among the plurality of working coils;
memory (320) storing at least one instruction; and
at least one processor (310) configured to execute at least one instruction to control operations of the first inverter (301_1) and the second inverter (301_2),
wherein the at least one processor (310) is configured to obtain first power (P1) output from the first inverter (301_1), obtain second power (P2) output from the second inverter (301_2), obtain a ratio value (R1) between the first power (P1) and the second power (P2), and when the obtained ratio value (R1) is greater than or less than a set ratio value (α), perform an operation of adjusting a duty of a switching device provided in at least one of the first inverter (301_1) and the second inverter (301_2), to include the ratio value (R1) in the set ratio value (α).

2. The induction heating device (100) of claim 1, wherein the at least one processor (310) is configured to reduce a duty of a switching device provided in an inverter that outputs high power among the first inverter (301_1) and the second inverter (302_2), to include the ratio value (R1) in the set ratio value (α).

3. The induction heating device (100) of claim 2, wherein the at least one processor (310) is configured to, when the duty of the switching device provided in the inverter that outputs high power is reduced, synchronize a frequency of the inverter that outputs high power with a frequency of an inverter that outputs low power.

4. The induction heating device (100) of any one of claims 1 to 3, wherein the at least one processor (310) is configured to increase the duty of the switching device provided in an inverter that outputs low power among the first inverter (301_1) and the second inverter (302_2), to include the ratio value (R1) in the set phase value (α).

5. The induction heating device (100) of any one of claims 1 to 4, wherein the at least one processor (310) is configured to reduce a duty of the switching device provided in an inverter that outputs high power among the first inverter (301_1) and the second inverter (302_2), and
increase a duty of a switching device provided in an inverter that outputs low power among the first inverter (301_1) and the second inverter (302_2), to include the ratio value (R1) in the set phase value (α).

6. The induction heating device (100) of any one of claims 1 to 5, wherein the set ratio value (α) is determined based on a ratio value between the first power (P1) and the second power (P2) obtained when a difference value between a temperature value at a first location (L1) and a temperature value at a second location (L2) on a bottom surface of the cooking vessel (104) is less than or equal to a set temperature value while a cooking vessel (104) is placed on the first working coil (210_1) and the second working coil (210_2).

7. The induction heating device (100) of any one of claims 1 to 6, wherein the at least one processor (310) is configured to, after adjusting the duty of the switching device, when the ratio value (R1) is included in the set ratio value (α), stop the operation of adjusting the duty of the switching device.

8. The induction heating device (100) of any one of claims 1 to 7, wherein the at least one processor (310) is configured to, obtain a first phase angle by using a waveform of the current supplied from the first inverter (301_1) to the first working coil (210_1) and a waveform of the voltage supplied from the first inverter (301_1) to the first working coil (210_1), obtain a second phase angle by using a waveform of the current supplied from the second inverter (301_2) to the second working coil (210_2) and a waveform of the voltage supplied from the second inverter (301_2) to the second working coil (210_2), and when at least one of the first phase angle and the second phase angle is less than or equal to a set phase value (θₗᵢₘᵢₜ), increase the duty of the switching device provided in the inverter in which a phase angle less than or equal to the set phase value (θₗᵢₘᵢₜ) is obtained.

9. The induction heating device (100) of any one of claims 1 to 7, wherein the at least one processor (310) is configured to obtain a phase angle by using a waveform of output voltage and a waveform of output current of an inverter that outputs high power, and
when the obtained phase angle is less than or equal to a set phase value (θₗᵢₘᵢₜ), increase the duty of the switching device provided in an inverter that outputs high power.

10. The induction heating device (100) of any one of claims 1 to 9, wherein the at least one processor (310) is configured to, when a sum (Pₜₒₜₐₗ) between the first power (P1) and the second power (P2) is greater than or equal to the set power (Pₓ), perform the operation to adjust the duty of the switching device by using the ratio value (R1) and the set ratio value (α).

11. A control method of an induction heating device (100) including a plurality of working coils, the control method of the induction heating device (100) comprising:
obtaining a first power (P1) output from a first inverter (301_1) configured to supply current to a first working coil (210_1) among the plurality of working coils;
obtaining a second power (P2) output from a second inverter (301_2) configured to supply current to a second working coil (210_2) among the plurality of working coils;
obtaining a ratio value (R1) between the first power (P1) and the second power (P2); and
when the ratio value (R1) is greater than or less than a set ratio value (α), performing an operation of adjusting a duty of a switching device provided in at least one of the first inverter (301_1) and the second inverter (301_2), to include the ratio value (R1) in the set ratio value (α).

12. The control method of the induction heating device of claim 11, wherein the adjusting of the duty of the switching device comprising reducing a duty of a switching device provided in an inverter that outputs high power among the first inverter (301_1) and the second inverter (301_2), to include the ratio value (R1) in the set ratio value (α).

13. The control method of the induction heating device of claim 12, wherein the reducing of the duty of the switching device provided in the inverter that outputs high power comprises, when the duty of the switching device provided in the inverter that outputs high power is reduced, synchronizing a frequency of the inverter that outputs high power with a frequency of an inverter that outputs low power.

14. The control method of the induction heating device of any one of claims 11 to 13, wherein the adjusting of the duty of the switching device comprises increasing the duty of the switching device provided in an inverter that outputs low power among the first inverter (301_1) and the second inverter (302_2), to include the ratio value (R1) in the set phase value (α).

15. The control method of the induction heating device of any one of claims 11 to 14, wherein the adjusting of the duty of the switching device comprises:
reducing a duty of the switching device provided in an inverter that outputs high power among the first inverter (301_1) and the second inverter (302_2); and
increasing a duty of a switching device provided in an inverter that outputs low power among the first inverter (301_1) and the second inverter (302_2), to include the ratio value (R1) in the set phase value (α).
